# EUROPÄISCHE PATENTSCHRIFT

(11) **EP 3 196 240 B1**
(45) Veröffentlichungstag und Bekanntmachung des Hinweises auf die Patenterteilung: **10.06.2020**
(21) Anmeldenummer: 16152585.2
(22) Anmeldetag: 25.01.2016
(51) Int. Cl.: C08L 9/02

(54) **HYDRIERTE NITRIL-BUTADIEN-PEG-ACRYLAT-COPOLYMERE**
HYDROGENATED NITRILE BUTADIENE PEG ACRYLATE COPOLYMERS
COPOLYMERES D'ACRYLATE PEG BUTADIENE NITRILE HYDROGENES

(43) Veröffentlichungstag der Anmeldung: 26.07.2017
(73) Patentinhaber: ARLANXEO Deutschland GmbH, 41540 Dormagen (DE)
(72) Erfinder: Salem, Hiyam, 50733 Köln (DE); Lieber, Susanna, 67663 Kaiserslautern (DE); David, Sarah, 41539 Dormagen (DE); Schneiders, Karola, 51465 Bergisch Gladbach (DE)

(56) Entgegenhaltungen:
- EP-A1- 2 471 851
- EP-A1- 2 868 677
- WO-A2-02/02657

## Beschreibung

Die vorliegende Erfindung betrifft hydrierte Nitril-Butadien-PEG-Acrylat-Copolymere, deren Herstellung, vulkanisierbare Mischungen enthaltend hydrierte Nitril-Butadien-PEG-Acrylat-Copolymere und deren Herstellung, sowie Vulkanisate, basierend auf hydrierten Nitril-Butadien-PEG-Acrylat-Copolymer.

Unter Nitril-Butadien-Copolymer (Nitrilkautschuk, abgekürzt auch als **"NBR"** bezeichnet) werden Kautschuke verstanden, bei denen es sich um Co-, Ter- oder Quartärpolymere aus mindestens einem α,β-ethylenisch ungesättigten Nitril, mindestens einem konjugierten Dien und gegebenenfalls einem oder mehreren weiteren copolymerisierbaren Monomeren handelt. Darunter werden explizit auch teilweise oder ganz **hydrierte Nitril-Butadien-Copolymer ("HNBR")** subsumiert. Unter hydrierten Nitril-Butadien-Copolymer werden entsprechende Co-, Ter- oder Quartärpolymere verstanden, bei denen die Summe der C=C-Doppelbindungen der einpolymerisierten Dien-Einheiten ganz oder teilweise hydriert ist.

Sowohl NBR als auch HNBR nehmen seit vielen Jahren einen festen Platz im Bereich der Spezialelastomere ein. Sie verfügen über ein ausgezeichnetes Eigenschaftsprofil in Form einer ausgezeichneten Ölbeständigkeit, einer guten Hitzebeständigkeit und einer hervorragenden Beständigkeit gegen Ozon und Chemikalien, wobei letztere im Fall des HNBR noch ausgeprägter als beim NBR ist. NBR und HNBR weisen ferner sehr gute mechanische sowie anwendungstechnische Eigenschaften auf. Aus diesem Grund finden sie breite Verwendung in den verschiedensten Anwendungsgebieten und werden beispielsweise eingesetzt zur Herstellung von Dichtungen, Schläuchen und Dämpfungselementen im Automobilsektor, ferner für Statoren, Bohrlochdichtungen und Ventildichtungen im Bereich der Ölförderung, sowie auch für zahlreiche Teile der Elektroindustrie, des Maschinen- und Schiffsbaus.

Eine der Anwendung für **HNBR** sind Dichtungen.

Dichtungen auf Basis von HNBR werden im Allgemeinen in Bereichen eingesetzt, in denen diese mit Kraftstoffen oder Schmierstoffen in Kontakt kommen. Daher sind für solche Anwendungen nur Kautschuke geeignet, die eine **Quellung,** gemessen in Fuel C, von **50 %** oder weniger, bevorzugt bis 45 % oder weniger und besonders bevorzugt bis 43 % oder weniger aufweisen.

Besonders im Automobilbereich unterliegen die Bauteile in global eingesetzten Fahrzeugen tiefen Temperaturen, häufig im Bereich unter -20 °C, bei denen die Materialien immer noch gute Dichtigkeit und Flexibilität aufweisen sollen. Ein Maß für die Tieftemperaturflexibilität ist die TR 10 Messung, bei der jene Temperatur bestimmt wird, bei der sich eine um 50 % gedehnte Probe nach dem Einfrieren wieder um 10 % zurückverformt, also Flexibilität aufweist. Daher ist es wünschenswert, dass das Material eine **sehr gute Tieftemperaturflexibilität** ausgedrückt durch einen TR10 von **-25°C** oder weniger, bevorzugt -29 °C oder weniger und besonders bevorzugt -30 °C oder weniger aufweist.

Dichtungen werden eingesetzt, um Bereiche geeignet gegeneinander zu dichten. Dabei wird zwischen dynamischen und statischen Dichtungen unterschieden. Besonders wichtig für den Erfolg einer Dichtung ist die Dichtkraft über einen großen Temperaturbereich, die im allgemeinen mit dem **Druckverformungsrest (DVR)** gemessen wird. Daher ist es erstrebenswert, dass die Dichtung nach Temperaturwechseln zwischen -20 °C und RT (ca. 23 °C) noch genügend abdichten, so dass das Material einen DVR bei -20 °C von **50 %** oder weniger, bevorzugt **30 %** oder weniger und besonders bevorzugt **20 %** oder weniger aufweisen soll.

Damit ein HNBR für die oben genannten Anforderungen geeignet ist, bedarf es somit eines ausgeglichenen Verhältnisses aller drei genannten Parameter.

Kommerziell erhältlich sind eine Vielzahl unterschiedlicher HNBR-Typen, die sich je nach Anwendungsbereich durch unterschiedliche Monomere, Molekulargewichte, Polydispersitäten sowie mechanische und physikalische Eigenschaften auszeichnen. Neben den Standardtypen werden vor allem Spezialtypen, die sich durch Gehalte spezieller **Termonomere** oder besondere Funktionalisierungen auszeichnen, zunehmend nachgefragt.

Als spezielle Termonomere sind beispielsweise **Carbonsäuren** bekannt (u.a. Acrylsäure und Methacrylsäure). Terpolymere mit diesen Termonomeren werden zusammengefasst als HXNBR wobei das "X" für die Säuregruppe steht. Darunter fallen auch Dicarbonsäuremonoester (u.a. Monomethylmaleat oder Monobutylmaleat).

Ebenfalls bekannt sind Terpolymere mit **Carbonsäureestermonomeren** (u.a. Methylacrylat und Butylacylat).

EP-A-1852447 offenbart einen hochgesättigten nitrilgruppenhaltigen Terpolymer-Kautschuk mit 10 bis 40 Gew.-% α,β-ethylenisch ungesättigten Nitrileinheiten, 10 bis 60 Gew.-% α,β-ethylenisch ungesättigte **Carbonsäureestereinheiten,** wie beispielsweise Butylacrylat und Ethylhexylacrylat, und 20 bis 70 Gew.-% einer konjugierten Dieneinheit, welches ein Vulkanisat mit ausgewogenen Eigenschaften aufweist. Die explizit offenbarten Beispiele weisen HNBR Terpolymer mit Butylacrylat-Einheiten auf mit einem TR 10 von bis zu -41 °C. Zum Quellverhalten in Fuel C sowie zum Druckverformungsrest der Terpolymere findet sich keine Offenbarung. Polyethylenglycolacrylate (PEG-Acrylate) sind nicht explizit als α,β-ethylenisch ungesättigte Carbonsäureestereinheiten offenbart.

EP-A-1247835 offenbart ein nitrilgruppenhaltiges hochgesättigtes Copolymer enthaltend (a) 10 bis 40 Gew.-% α,β-ethylenisch ungesättigte Nitrileinheiten, (b) 10 bis 60 Gew.-% α,β-ethylenisch ungesättigte **Carbonsäureestereinheiten,** (c) 0,01 bis 21 Gew.-% konjugierter Dieneinheiten und 14 bis 69,99 Gew.-% gesättigter konjugierter Dieneinheiten, wobei die Summe der Monomereinheiten (c) und (d) 20 bis 70 Gew.-% beträgt und das Verhältnis der Monomereinheiten (d)/[(c)+(d)] wenigstens 70 Gew.-% beträgt und die Differenz zwischen der extrapolierten Anfangstemperatur des Glasübergangs (Tig) und der extrapolierten Endtemperatur des Glasübergangs (Teg) nicht größer als 10°C ist. Die vulkanisierten Produkte des Copolymer-Kautschuks weisen gute Kältebeständigkeit, Ölbeständigkeit und gute dynamische Eigenschaften auf. Explizite Ausführungsbeispiele von HNBR Terpolymeren mit 10 bis 25 Gew.-% PEG-Acrylateinheiten sind nicht offenbart.

Weiterhin ist in EP-A-1243602 ein Terpolymer offenbart enthaltend (a) 0 bis 20 Gew.-% 1,3-Butadieneinheiten, (b) 0 bis 50 Gew.-% gesättigte 1,3-Butadieneinheiten, (c) 40 bis 50 Gew.-% α,β-ethylenisch ungesättigte Nitrileinheiten, und (d) 10 bis 35 Gew.-% und zumindest 8 Mol.-% **anderer Monomereinheiten,** wobei die Summe der 1,3-Butadieneinheiten (a) und der gesättigten 1,3-Butadieneinheiten (b) im Bereich von 30 bis 50 Gew.-% ist. Bei der anderen Monomereinheit kann es sich u.a. um ungesättigte **Carbonsäureester** handeln. Dieser nitrilgruppenhaltige hochgesättigte Copolymer-Kautschuk weist im vulkanisierten Produkt gute Ölbeständigkeit auf. Explizite HNBR Terpolymere mit hydrierten PEG-Acrylateinheiten sind nicht offenbart. Explizite Beispiele finden sich lediglich mit Butylacrylat.

Weiterhin bekannt sind Nitril-Butadien-Copolymere mit **Alkoxyalkylcarbonsäureestermonomeren.**

EP-A-2868677 offenbart einen nitrilgruppenhaltigen Copolymer mit 1 bis 9 Gew.-% **Monocarbonsäuremonoestereinheiten** mit einer Glastemperatur von weniger als - 20 °C und einer Ölquellung kleiner als 20 %. Darin werden explizit Terpolymere mit 4,8 Gew.-% und 7,7 Gew.-% **Methoxyethylacrylat,** d.h. PEG-1-Acrylat, bzw. mit 4,1 Gew.-% PEG-5-Methacrylat. EP-A-2868277 offenbart keine Informationen bezüglich des Druckverformungsrestes, der TR 10 und der Quellung in Fuel C.

Li et al. offenbart in J. Polym. Res. 2012, 19, 9853 das Aufpolymerisieren von Polyethylenglykolmonoalkylether auf XNBR. Das Aufpolymerisieren der Polyethylenglykolmonoalkylether senkt dabei die Glasübergangstemperatur ab. Die Kettenlänge des Polyethylenglykolethers ist nicht genauer spezifiziert. Es sind keine Informationen bezüglich der Quellung in Fuel C, dem TR 10 und dem Druckverformungsverhalten von Vulkanisaten zu entnehmen.

EP-A-2868676 offenbart ein nitrilgruppenhaltiges Copolymer- mit 1 bis 9 Gew.-% α,β-ethylenisch ungesättigten carbonylgruppenhaltigen Monomereinheiten. Als explizite Beispiele werden hydrierte Terpolymere mit PEG-11-Monomeren offenbart.

Zur exakteren Einstellung der gewünschten Polymereigenschaften reichen häufig Terpolymere nicht mehr aus. **Quartärpolymere,** d.h. Polymere aus vier Monomereinheiten, finden zunehmend Verwendung. Bekannt sind Quartärpolymere mit Carbonsäuren und Carbonsäureestern.

EP-A-2392599 offenbart ein zumindest teilweise hydriertes Nitril-Butadien-Copolymer enthaltend 5 bis 60 Gew.-% α,β-ethylenisch ungesättigte Nitrileinheiten, 20 bis 83,9 Gew.-% konjugierte Dieneinheiten, 0,1 bis 20 Gew.-% **Dicarbonsäuremonoestermonomereinheiten,** 11 bis 50 Gew.-% **Alkoxyalkyl(meth)acrylsäureestereinheiten** mit 2 bis 8 Kohlenstoff Atomen. In Tabelle 2 werden unter anderem Quartärpolymere beschrieben mit einem geringen Acrynitril-Gehalt von 21,3 bzw. 24,8 Gew.-%, 46,6 bzw. 47,3 Gew.-% Butadien, 4,5 bis 5 Gew.-% Mono-n-butyl-acrylat und 23,0 bzw. 27,1 Gew.-% Methoxyethylacrylat. Die Vulkanisate, die aus diesen hydrierten Nitril-Butadien-Copolymeren hergestellt werden, weisen gute TR10 Werte auf, aber es wird kein Hinweis auf das Quellverhalten in Fuel C und kein Druckverformungsrest bei tiefen Temperaturen offenbart. HNBR-Terpolymere mit Polyethyleneglycolacrylateinheiten sind nicht explizit offenbart. Außerdem sind keine Terpolymer bestehend aus Acrylnitril, Butadien und PEG-1-Acrylat offenbart.

JP-A-2012-031311 beschreibt einen nitrilgruppenhaltigen, hochgesättigten Copolymer-Kautschuk enthaltend (a) 10,0 bis 40,0 Gew.-% α,β-ethylenisch ungesättigte Nitrileinheiten, (b) 5,5 bis 10,0 Gew.-% α,β-ethylenisch ungesättigte **Dicarbonsäuremonoestereinheiten,** (c) 11,0 bis 30,0 Gew.-% **Alkoxyalkyl(meth)acrylateinheiten** mit Alkoxyalkyl-Gruppen mit 2 bis 8 Kohlenstoffatomen, und (d) 20,0 bis 73,5 Gew.-% konjugierte Dieneinheiten, wobei zumindest ein Teil der konjugierten Dieneinheiten hydriert ist. HNBR Terpolymere mit Polyethylenglycolacrylateinheiten sind nicht explizit offenbart.

Die Wahl des Monomers bzw. der Monomere hat somit entscheidenden Einfluss auf die Polymereingenschaften und ist nicht ohne Weiteres vorhersagbar.

Die bisher bekannten hydrierten Nitril-Butadien-Acrylat-Copolymere erfüllen die Anforderung einer minimalen Quellung in Fuel C, einer sehr guten Tieftemperaturflexibilität (TR 10) sowie einem gleichzeitig niedrigen Druckverformungsrest (DVR) nicht zufriedenstellend. Somit sind die bekannten Terpolymere für Dichtungen mit hohen Anforderungen noch nicht befriedigend.

Demgemäß lag eine **Aufgabe** der vorliegenden Erfindung in der Bereitstellung eines Nitril-Butadien-Copolymers, dessen Vulkanisate eine exzellente Tieftemperaturbeständigkeit (bestimmt durch TR 10) von -25 °C oder weniger, bevorzugt -30 °C oder weniger, besonders bevorzugt -34 °C oder weniger, einen Druckverformungsrest bei -20 °C von 50 % oder weniger, bevorzugt 30 % oder weniger, besonders bevorzugt 20 % oder weniger und gute Medienbeständigkeit (bestimmt durch die Quellung in Fuel C) von 50 % oder weniger, 45 % oder weniger, oder 43 % oder weniger aufweisen, der die Nachteile des Standes der Technik überwindet. Zusätzlich ist es wünschenswert, dass das bereitgestellte Nitril-Butadien-Copolymer verbesserte Alterungseigenschaften aufweist.

Die **Lösung** der Aufgabe und Gegenstand der vorliegenden Erfindung ist nun ein hydriertes Nitril-Butadien-PEG-Acrylat-Copolymer, enthaltend
a) **25** bis **38** Gew.-%, bevorzugt 27 bis 37 Gew.-% und besonders bevorzugt 29 bis 36 Gew.-% zumindest einer α,β-ethylenisch ungesättigten **Nitrileinheit,**
b) **40** bis **60** Gew.-%, bevorzugt 42 bis 58 Gew.-% und besonders bevorzugt 44 bis 56 Gew.-% zumindest einer konjugierten **Dieneinheit** und
c) **10** bis **25 Gew.-%,** bevorzugt 11 bis 22 Gew.-% und besonders bevorzugt 12 bis 20 Gew.-% zumindest einer PEG-**Acrylateinheit** abgeleitet von einem PEG-Acrylat der allgemeinen Formel (I) 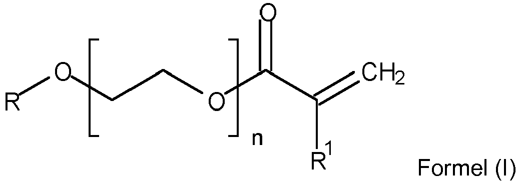 wobei
   - R: gleich Wasserstoff oder verzweigtes oder unverzweigtes C₁-C₂₀-Alkyl, bevorzugt Methyl, Ethyl, Butyl oder Ethylhexyl, ist,
   - n: gleich 1 bis 8, bevorzugt 2 bis 8, besonders bevorzugt 2 bis 5 und ganz besonders bevorzugt 3 ist und
   - R¹: gleich Wasserstoff oder CH₃- ist,
   wobei das hydrierte Nitril-Butadien-PEG-Acrylat-Copolymer für den Fall, dass n gleich 1 ist keine weitere copolymerisierbare Monomereinheit enthält, die eine freie Carbonsäuregruppe aufweist.

In der erfindungsgemäßen Ausführungsform ist zumindest ein Teil der konjugierten Dieneinheiten hydriert. Bevorzugt beträgt der Grad der Hydrierung 50 % oder mehr, besonders bevorzugt 90 % oder mehr, ganz besonders bevorzugt 99 % oder mehr.

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche bzw. Verfahrensparameter umfasst.

Bei dem Begriff **"Nitril-Butadien-PEG-Acrylat-Copolymer"** handelt es sich im Rahmen dieser Erfindung um ein Copolymer enthaltend zumindest eine α,β-ethylenisch ungesättigte Nitrilmonomereinheit, zumindest eine konjugierte Dienmonomereinheit und zumindest eine PEG-Acrylat-Einheit abgeleitet von einem PEG-Acrylat der allgemeinen Formel (I).

Der Begriff **Copolymer** umfasst Polymere mit mehr als einer Monomereinheit. In einer Ausführungsform der Erfindung ist das Copolymer beispielsweise ausschließlich abgeleitet von den drei beschriebenen Monomertypen (a), (b) und (c) und ist daher ein **Terpolymer.** Ebenso umfasst vom Begriff Copolymer sind beispielsweise weiterhin **Quartärpolymere,** abgeleitet von den drei beschriebenen Monomertypen (a), (b) und (c) und einer weiteren Monomereinheit (d).

### α,β-ethylenisch ungesättigtes Nitril

Als **α,β-ethylenisch ungesättigtes Nitril,** das die **α,β-ethylenisch ungesättigten Nitrileinheiten (a)** bildet, kann jedes bekannte α,β-ethylenisch ungesättigte Nitril eingesetzt werden. Bevorzugt sind (C₃-C₅)-α,β-ethylenisch ungesättigte Nitrile wie Acrylnitril, α-Haloacrylnitril wie beispielsweise α-Chloracrylnitril und α-Bromacrylnitril, α-Alkylacrylnitril wie beispielsweise Methacrylnitril, Ethacrylnitril oder Mischungen aus zwei oder mehr α,β-ethylenisch ungesättigten Nitrilen. Besonders bevorzugt ist Acrylnitril, Methacrylnitril, Ethacrylnitril oder Mischungen daraus. Ganz besonders bevorzugt ist Acrylnitril.

Die **Menge an α,β-ethylenisch ungesättigten Nitrileinheiten (a)** liegt typischerweise im Bereich von 25 bis 38 Gew.-%, bevorzugt 27 bis 37 Gew.-%, besonders bevorzugt von 29 bis 36 Gew.-% bezogen auf die Gesamtmenge von 100 Gew.-% aller Monomereinheiten.

### Konjugiertes Dien

Das **konjugierte Dien,** das die **konjugierte Dieneinheit (b)** bildet, kann von jeder Natur sein, insbesondere konjugierte C₄-C₁₂-Diene. Besonders bevorzugt sind 1,3-Butadien, Isopren, 2,3-Dimethylbutadien, 1,3-Pentadien (Piperylen) oder Gemische daraus. Insbesondere bevorzugt sind 1,3-Butadien und Isopren oder Gemische daraus. Ganz besonders bevorzugt ist 1,3-Butadien.

Die **Menge an konjugiertem Dien** liegt typischerweise im Bereich von 40 bis 60 Gew.-%, bevorzugt 42 bis 58 Gew.-% und besonders bevorzugt 44 bis 56 Gew.-%, bezogen auf die Gesamtmenge von 100 Gew.-% aller Monomereinheiten.

### PEG-Acrylat

Zusätzlich zu den α,β-ethylenisch ungesättigten Nitrileinheiten und den konjugierten Dieneinheiten enthält das hydrierte Nitril-Butadien-PEG-Acrylat-Copolymer als dritte Einheit zumindest eine PEG-**Acrylateinheit,** abgeleitet von PEG-Acrylaten der allgemeinen Formel (I) 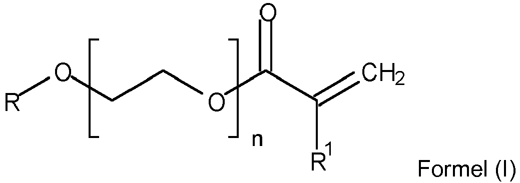 wobei
R gleich Wasserstoff oder verzweigtes oder unverzweigtes C₁-C₂₀-Alkyl, bevorzugt Methyl, Ethyl, Butyl oder Ethylhexyl, ist,
n gleich 1 bis 8, bevorzugt 2 bis 8, besonders bevorzugt 2 bis 5 und ganz besonders bevorzugt 3 ist und
R¹ gleich Wasserstoff oder CH₃- ist.

Der Begriff "(Meth)acrylat" steht im Rahmen dieser Erfindung für "Acrylat" und "Methacrylat". Wenn der Rest R¹ der allgemeinen Formel (I) CH₃- ist, so handelt es sich um ein Methacrylat.

Der Begriff "Polyethylenglycol" bzw. die Abkürzung "PEG" steht im Rahmen dieser Erfindung sowohl für Monoethylenglycol-Abschnitte mit einer Ethylenglycol-Wiederholungseinheit (PEG-1; n gleich 1), als auch Polyethylenglycol-Abschnitte mit 2 bis 8 Ethylenglycol-Wiederholungeinheiten (PEG-2 bis PEG-8; n gleich 2 bis 8).

Der Begriff "PEG-Acrylat" wird auch mit PEG-X-(M)A abgekürzt, wobei "X" für die Anzahl an Ethylenglycol-Wiederholungseinheiten steht, "MA" für Methacrylat steht und "A" für Acrylat steht.

Acrylat-Einheiten, abgeleitet von PEG-Acrylaten der allgemeinen Formel (I) werden im Rahmen dieser Erfindung als "PEG-Acrylateinheit" bezeichnet.

Bevorzugte PEG-Acrylateinheiten sind abgeleitet von den PEG-Acrylaten der nachfolgenden Formeln Nr. 1 bis Nr. 10, wobei n gleich 1, 2, 3, 4, 5, 6, 7 oder 8, bevorzugt 2, 3, 4, 5, 6, 7 oder 8, besonders bevorzugt 3, 4, 5, 6, 7 oder 8 und ganz besonders bevorzugt 3 ist:

| | |
|---|---|
| Polyethylenglycolacrylat | 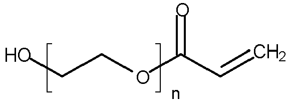 |
| (Formel Nr. 1) | |
| Polyethylenglycolmethacrylat | 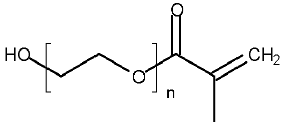 |
| (Formel Nr. 2) | |
| Methoxypolyethylenglycolacrylat | 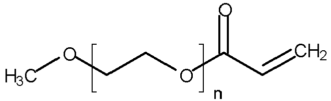 |
| (Formel Nr. 3) | |
| Methoxypolyethylenglycolmethacrylat | 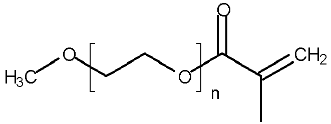 |
| (Formel Nr. 4) | |
| Ethoxypolyethylenglycolacrylat | 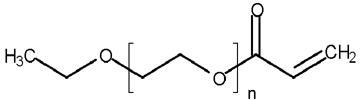 |
| (Formel Nr. 5) | |
| Ethoxypolyethylenglycolmethacrylat | 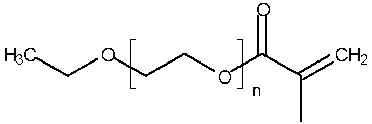 |
| (Formel Nr. 6) | |
| Butoxypolyethylenglycolacrylat | 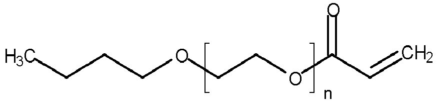 |
| (Formel Nr. 7) | |
| Butoxypolyethylenglycolmethacrylat | 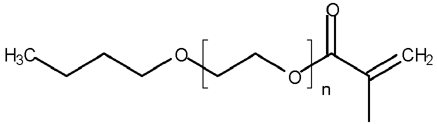 |
| (Formel Nr. 8) | |
| Ethylhexyloxypolyethylenglycol-acrylat | 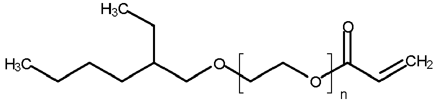 |
| (Formel Nr. 9) | |
| Ethylhexyloxypolyethylenglycolmethacrylat | 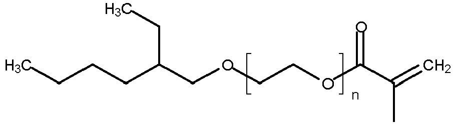 |
| (Formel Nr. 10) | |

Andere gebräuchliche Bezeichnungen für Methoxypolyethylenglycolacrylat (Formel Nr. 3) sind beispielsweise Poly(ethylenglycol)methyletheracrylat, Acryl-PEG, Methoxy-PEG-acrylat, Methoxypoly(ethyleneglycol)monoacrylat, Poly(ethyleneglycol)monomethylether-monoacrylat oder mPEG-acrylat.

Diese PEG-Acrylate können kommerziell erworben werden, beispielsweise bei Arkema unter dem Handelsnamen Sartomer®, bei Evonik unter dem Handelsnamen Visiomer® oder bei Sigma Aldrich.

Die **Menge** der PEG-Acrylateinheiten liegt in erfindungsgemäßen Copolymeren im Bereich von 10 bis 25 Gew.-%, bevorzugt 11 bis 22 Gew.-% und besonders bevorzugt 12 bis 20 Gew.-%, bezogen auf die Gesamtmenge von 100 Gew.-% aller Monomereinheiten.

Bei einem bevorzugten erfindungsgemäßen hydrierten Nitril-Butadien-PEG-Acrylat-Copolymer ist die α,β-ethylenisch ungesättigte Nitrileinheit (a) abgeleitet von Acrylnitril oder Methacrylnitril, besonders bevorzugt von **Acrylnitril,** die konjugierte Dieneinheit (b) von Isopren oder 1,3-Butadien, besonders bevorzugt von **1,3-Butadien,** und die PEG-Acrylateinheit (c) abgeleitet von PEG-Acrylat der allgemeinen Formel (I), wobei n gleich 3 bis 8 ist, besonders bevorzugt von PEG-Acrylat der **allgemeinen Formel (I) mit n gleich 3.**

Zusätzlich kann das hydrierte Nitril-Butadien-PEG-Acrylat-Copolymer ein oder mehrere **weitere copolymerisierbare Monomere** in einer Menge von 0,1 Gew.-% bis 10 Gew.-%, bevorzugt 0,1 Gew.-% bis 5 Gew.-% bezogen auf die Gesamtmenge von 100 Gew.-% aller Monomereinheiten enthalten. Die Mengen der übrigen Monomereinheiten werden dann geeignet reduziert, so dass die Summe immer 100 Gew.-% ergibt. Als weitere copolymerisierbare Monomere können beispielsweise
- **aromatische Vinylmonomere,** bevorzugt Styrol, α-Methylstyrol und Vinylpyridin,
- **fluorhaltige Vinylmonomere,** bevorzugt Fluorethylvinylether, Fluorpropylvinylether, o-Fluormethylstyrol, Vinylpentafluorbenzoat, Difluorethylen und Tetrafluorethylen, oder auch
- **α-Olefine,** bevorzugt C₂-C₁₂-Olefine wie beispielsweise Ethylen, 1-Buten, 4-Buten, 4-Methyl-1-penten, 1-Hexen oder 1-Octen,
- **nicht-konjugierte Diene,** bevorzugt C₄-C₁₂-Diene wie, 1,4-Pentadien, 1,4-Hexadien, 4-Cyanocyclohexen, 4-Vinylcyclohexen, Vinylnorbonen, Dicyclopentadien oder auch
- **Alkine,** wie 1- oder 2-Butin,
- **α,β-ethylenisch ungesättigte Monocarbonsäuren,** bevorzugt Acrylsäure, Methacrylsäure, Crotonsäure oder Zimtsäure,
- **α,β-ethylenisch ungesättigte Monocarbonsäureester,** bevorzugt Butylacrylat,
- **α,β-ethylenisch ungesättigte Dicarbonsäuren** bevorzugt Maleinsäure, Fumarsäure, Citraconsäure, Itakonsäure,
- **α,β-ethylenisch ungesättigte Dicarbonsäure Monoestern** wie beispielsweise
   ∘ Alkyl-, insbesondere C₄-C₁₈-Alkyl-, bevorzugt n-Butyl-, tert.-Butyl-, n-Pentyl- oder n-Hexyl-, besonders bevorzugt Mono-n-butylmaleat, Mono-n-butylfumarat, Mono-n-butylcitraconat, Mono-n-butylitaconat;
   ∘ Alkoxyalkyl-, insbesondere C₄-C₁₈-Alkoxyalkyl-, bevorzugt C₄-C₁₂-Alkoxyalkyl-,
   ∘ Hydroxyalkyl-, insbesondere C₄-C₁₈-Hydroxyalkyl-, bevorzugt C₄-C₁₂-Hydroxyalkyl-,
   ∘ Cycloalkyl-, insbesondere C₅-C₁₈-Cycloalkyl-, bevorzugt C₆-C₁₂-Cycloalkyl, besonders bevorzugt Monocyclopentylmaleat, Monocyclohexylmaleat, Monocycloheptylmaleat, Monocyclopentylfumarat, Monocyclohexylfumarat, Monocycloheptylfumarat, Monocyclopentylcitraconat, Monocyclohexylcitraconat, Monocycloheptylcitraconat, Monocyclopentylitaconat, Monocyclohexylitaconat und Monocycloheptylitaconat,
   ∘ Alkylcycloalkyl-, insbesondere C₆-C₁₂-Alkylcycloalkyl-, bevorzugt C₇-C₁₀-Alkylcycloalkyl, besonders bevorzugt Monomethylcyclopentylmaleat und Monoethylcyclohexylmaleat, Monomethylcyclopentylfumarat und Monoethylcyclohexylfumarat, Monomethylcyclopentylcitraconat und Monoethylcyclohexylcitraconat; Monomethylcyclopentylitaconat und Monoethylcyclohexylitaconat;
   ∘ Aryl-, insbesondere C₆-C₁₄-Aryl-Monoester, bevorzugt Maleinsäuremonoarylester, Fumarsäuremonoarylester, Citraconsäuremonoarylester oder Itaconsäuremonoarylester, besonders bevorzugt Monophenylmaleat oder Monobenzylmaleat, Monophenylfumarat oder Monobenzylfumarat, Monophenylcitraconat oder Monobenzylcitraconat, Monophenylitaconat oder Monobenzylitaconat oder Mischungen davon,
   ∘ ungesättigte Polycarboxylsäurepolyalkylester wie beispielsweise Dimethylmaleat, Dimethylfumarat, Dimethylitaconate oder Diethylitaconate; oder
   ∘ aminogruppenhaltige α,β-ethylenisch ungesättigte Carboxylsäureester wie beispielsweise Dimethylaminomethylacrylat oder Diethylaminoethylacrylat
- **copolymerisierbare Antioxidantien,** beispielsweise N-(4-Anilinphenyl)acrylamid, N-(4-Anilinphenyl)methacrylamid, N-(4-Anilinphenyl)cinnamamid, N-(4-Anilinphenyl)crotonamid, N-Phenyl-4-(3-vinylbenzyloxy)anilin, N-Phenyl-4-(4-vinylbenzyloxy)anilin oder
- **vernetzbare Monomere,** beispielsweise Divinyl-Komponenten wie beispielsweise Divinylbenzol; Di(meth)acrylsäureester wie beispielsweise Ethylenglycoldi(meth)acrylat, Diethylenglycoldi(meth)acrylat, Butandioldi(meth)acrylat oder Polyethylenglycoldi(meth)acrylat oder Tri(meth)acrylsäureester wie beispielsweise Trimethylolpropantri(meth)acrylat; selbstvernetzbare Monomere wie beispielsweise N-Methylol(meth)acrylamid oder N, N'-Dimethylol(meth)acrylamid
   verwendet werden.

Manche weitere copolymerisierbare Monomere beeinflussen die physikalischen Eigenschaften der erfindungsgemäßen hydrierten Nitril-Butadien-PEG-Acrylat-Copolymer.

Copolymerisierte Monomereinheiten mit mindestens einer freien Carbonsäuregruppe wie beispielsweise Acrylsäure, Methacrylsäure, ethylenisch ungesättigte Dicarbonsäuremonoester oder ethylenisch ungesättigte Dicarbonsäuren führen im Allgemeinen zu einer Verschlechterung der Alterungseigenschaften. Durch freie Säuregruppen im Polymer konnte ein Abfall der Dehnung nach Alterung bei erhöhten Temperaturen festgestellt werden. Gleichzeitig konnte ein Anstieg der Glasübergangstemperatur beobachtet werden, was negative Auswirkungen auf die hier gestellte Anforderung von ausgezeichneter Tieftemperaturflexibilität hat. Der Einfluss auf die Alterungseigenschaften ist unter anderem abhängig von der Länge der copolymerisierten PEG-Acrylateinheit, wobei sich die Alterungseigenschaften insbesondere bei einer copolymerisierten PEG-1-Einheit, das heißt bei PEG-Acrylat-Einheiten abgeleitet von (Alkoxy)monoethylenglycol(meth)acrylat, besonders verschlechtern.

In einer Ausführungsform enthält das erfindungsgemäße hydrierte Nitril-Butadien-PEG-Acrylat-Copolymer neben der α,β-ethylenisch ungesättigten Nitrileinheit, der konjugierten Dieneinheit und der PEG-Acrylateinheit abgeleitet von einem PEG-Acrylat der allgemeinen Formel (I), wobei n gleich 1 ist, keine Monomereinheiten mit einer freien Carbonsäuregruppe.

Ganz besonders bevorzugt enthält das hydriert Nitril-Butadien-PEG-Acrylat-Copolymer neben der α,β-ethylenisch ungesättigten Nitrileinheit, der konjugierten Dieneinheit und der PEG-Acrylateinheit, abgeleitet von einem PEG-Acrylat der allgemeinen Formel (I), keine Monomereinheiten mit einer freien Carbonsäuregruppe.

Am meisten bevorzugt enthält das hydrierte Nitril-Butadien-PEG-Acrylat-Copolymer neben der α,β-ethylenisch ungesättigten Nitrileinheit, der konjugierten Dieneinheit und der PEG-Acrylateinheit, abgeleitet von einem PEG-Acrylat der allgemeinen Formel (I), keine weiteren Monomereinheiten. Die bedeutet, dass diese Ausführungsform nur aus α,β-ethylenisch ungesättigten Nitrileinheiten, konjugierten Dieneinheiten und PEG-Acrylateinheiten, abgeleitet von einem PEG-Acrylat der allgemeinen Formel (I), besteht.

Das erfindungsgemäße hydrierte Nitril-Butadien-PEG-Acrylat-Copolymer weist typischerweise ein Zahlenmittel des **Molekulargewichts (Mn)** von 10,000 g/mol bis 2,000,000 g/mol, bevorzugt 50,000 g/mol bis 1,000,000 g/mol, besonders bevorzugt 100,000 g/mol bis 500,000 g/mol und ganz besonders bevorzugt 150,000 g/mol bis 300,000 g/mol auf.

Das erfindungsgemäße hydrierte Nitril-Butadien-PEG-Acrylat-Copolymer weist typischerweise einen **Polydispersitätsindex** (PDI = M_{w}/Mₙ, wobei M_{w} das Gewichtsmittel des Molekulargewichts darstellt) von 1,5 bis 6, bevorzugt 2 bis 5 und besonders bevorzugt 2,5 bis 4 auf.

Das erfindungsgemäße hydrierte Nitril-Butadien-PEG-Acrylat-Copolymer weist typischerweise eine **Mooney Viskosität** (ML1+4@100°C) von 10 bis 150, bevorzugt von 20 bis 120 und besonders bevorzugt von 25 bis 100 auf.

Das erfindungsgemäße hydrierte Nitril-Butadien-PEG-Acrylat-Copolymer ist dadurch gekennzeichnet, dass
- der **TR 10,** gemessen nach der Messmethode ISO 2921:2005, einen Wert von - 25 °C oder weniger, bevorzugt einen Wert von -30 °C oder weniger und besonders bevorzugt einen Wert von -34 °C oder weniger aufweist, und
- die **Quellung in Fuel C,** gemessen nach DIN ISO 1817, einen Wert von 50 % oder weniger, bevorzugt einen Wert von 45 % oder weniger und besonders bevorzugt einen Wert von 43 % oder weniger aufweist, und
- der **Druckverformungsrest (DVR),** gemessen bei -20 °C nach der Messmethode DIN ISO 815-2, einen Wert von 50 % oder weniger, bevorzugt einen Wert von 30 % oder weniger und besonders bevorzugt einen Wert von 20 % oder weniger aufweist.

### Verfahren zur Herstellung von Nitril-Butadien-PEG-Acrylat-Copolymeren

Gegenstand der Erfindung ist ferner ein Verfahren zur Herstellung von Nitril-Butadien-PEG-Acrylat-Copolymere, dadurch gekennzeichnet, dass mindestens ein α,β-ethylenisch ungesättigtes Nitril, mindestens ein konjugiertes Dien und mindestens ein PEG-Acrylat der allgemeinen Formel (I) einer Emulsionspolymerisation unterworfen werden.

Die Herstellung der zur Hydrierung benötigten Nitril-Butadien-PEG-Acrylat-Copolymere kann durch Polymerisation der vorgenannten Monomere ist in der Literatur (z.B. Houben-Weyl, Methoden der Organischen Chemie Bd.14/1, 30 Georg Thieme Verlag Stuttgart 1961) umfangreich beschrieben und ist nicht im Besonderen beschränkt. Im Allgemeinen handelt es sich um ein Verfahren in dem α,β-ethylenisch ungesättigte Nitrileinheiten, konjugierte Dieneinheiten, und PEG-Acrylateinheiten nach Belieben copolymerisiert werden. Als Polymerisationsverfahren kann jedes bekannte Emulsions-Polymerisationsverfahren, Suspensions-Polymerisationsverfahren, Bulk-Polymerisationsverfahren und Lösungs-Polymerisationsverfahren verwendet werden. Bevorzugt ist dabei das Emulsions-Polymerisationsverfahren. Unter Emulsionspolymerisation wird insbesondere ein an sich bekanntes Verfahren verstanden, bei dem als Reaktionsmedium meist Wasser verwendet wird (siehe u. a. Römpp Lexikon der Chemie, Band 2, 10. Auflage 1997; P. A. Lovell, M. S. El-Aasser, Emulsion Polymerization and Emulsion Polymers, John Wiley & Sons, ISBN: 0471 96746 7; H. Gerrens, Fortschr. Hochpolym. Forsch. 1, 234 (1959)). Die Einbaurate des Termonomers kann durch den Fachmann ohne weiteres so eingestellt werden, das ein erfindungsgemäßes Terpolymer erhalten wird. Die Monomere können vorgelegt werden bzw. durch Inkrementierung in mehreren Schritten umgesetzt werden.

Gegenstand der Erfindung sind somit auch Nitril-Butadien-PEG-Acrylat-Copolymere, enthaltend
a) 25 bis 38 Gew.-%, bevorzugt 27 bis 37 Gew.-% und besonders bevorzugt 29 bis 36 Gew.-% zumindest einer α,β-ethylenisch ungesättigten Nitrileinheit,
b) 40 bis 60 Gew.-%, bevorzugt 42 bis 58 Gew.-%, und besonders bevorzugt 44 bis 59 Gew.-% zumindest einer konjugierten Dieneinheit und
c) 10 bis 25 Gew.-%, bevorzugt 11 bis 22 Gew.-% und besonders bevorzugt 12 bis 20 Gew.-% zumindest einer PEG-Acrylateinheit abgeleitet von einem PEG-Acrylat der allgemeinen Formel (I) 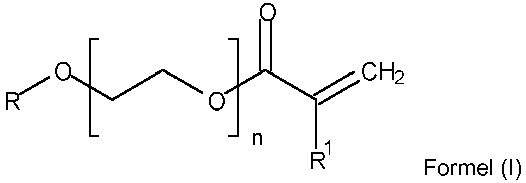 wobei
   - R: gleich Wasserstoff oder verzweigtes oder unverzweigtes C₁-C₂₀-Alkyl, bevorzugt Methyl, Ethyl, Butyl oder Ethylhexyl, ist,
   - n: gleich 1 bis 8, bevorzugt 2 bis 8, besonders bevorzugt 2 bis 5 und ganz besonders bevorzugt 3 ist und
   - R¹: gleich Wasserstoff oder CH₃- ist,
   wobei das Nitril-Butadien-PEG-Acrylat-Copolymer für den Fall, dass n gleich 1 ist keine weitere copolymerisierbare Monomereinheit enthält, die eine freie Carbonsäuregruppe aufweist.

### Metathese

Es ist auch möglich, dass sich an die Herstellung des Nitril-Butadien-PEG-Acrylat-Copolymers eine Metathese-Reaktion zur Reduktion des Molekulargewichts des Nitril-Butadien-PEG-Acrylat-Copolymers oder eine Metathese-Reaktion und eine nachfolgende Hydrierung oder nur eine Hydrierung anschließt. Diese Metathese- bzw. Hydrierungsreaktionen sind bei dem Fachmann hinlänglich bekannt und in der Literatur beschrieben. Die Metathese ist beispielsweise aus WO-A-02/100941 sowie der WO-A-02/100905 bekannt und kann zum Molekulargewichtsabbau eingesetzt werden.

### Verfahren zur Herstellung von hydrierten Nitril-Butadien-PEG-Acrylat-Copolymere

Gegenstand der Erfindung ist auch ein Verfahren zur Herstellung hydrierter Nitril-Butadien-PEG-Acrylat-Copolymere, dadurch gekennzeichnet, dass mindestens ein α,β-ethylenisch ungesättigtes Nitril, mindestens ein konjugiertes Dien und mindestens ein PEG-Acrylat der allgemeinen Formel (I) einer Emulsionspolymerisation unterworfen und anschließend hydriert werden.

Im Anschluss an die Copolymerisation der Nitril-Butadien-PEG-Acrylat-Copolymere werden diese, zumindest teilweise, hydriert (Wasserstoff-Additions-Reaktion). In den zumindest teilweise hydrierten Nitril-Butadien-Copolymeren ist zumindest ein Teil der C=C-Doppelbindungen der vom konjugierten Dien abgeleiteten Wiederholungseinheit spezifisch hydriert. Der Grad der Hydrierung der konjugierten Dieneinheiten (b) ist in erfindungsgemäßen hydrierten Nitril-Butadien-PEG-Acrylat-Copolymeren 50 % oder mehr, bevorzugt 90 % oder mehr und besonders bevorzugt 99 % oder mehr.

Bei dem Begriff **"hydriertes Nitril-Butadien-PEG-Acrylat-Copolymer"** handelt es sich im Rahmen dieser Erfindung somit um ein Copolymer enthaltend zumindest eine α,β-ethylenisch ungesättigte Nitrilmonomereinheit, zumindest eine konjugierte Dienmonomereinheit und zumindest eine PEG-Acrylat-Einheit abgeleitet von einem PEG-Acrylat der allgemeinen Formel (I), welches zu 50 % oder mehr, bevorzugt 90 % oder mehr und besonders bevorzugt 99 % oder mehr hydriert ist.

Die Hydrierung von Nitril-Butadien-Copolymeren ist bekannt, beispielsweise aus US-A-3 700 637, DE-A-2 539 132, DE-A-3 046 008, DE-A-3 046 251, DE-A-3 227 650, DE-A-3 329 974, EP-A-111 412, FR-B 2 540 503. Hydrierte Nitril-Butadien-Copolymere zeichnen sich durch hohe Reißfestigkeit, geringen Abrieb, niedrige bleibende Verformung nach Druck- und Zugbeanspruchung und gute Ölbeständigkeit, vor allem aber durch bemerkenswerte Stabilität gegen thermische und oxidative Einflüsse aus.

### Vulkanisierbare Mischungen enthaltend hydrierte Nitril-Butadien-PEG-Acrylat-Copolymere

Gegenstand der vorliegenden Erfindung sind ferner **vulkanisierbare Mischungen** enthaltend des erfindungsgemäßen hydrierten Nitril-Butadien-PEG-Acrylat-Copolymers und mindestens einen Vernetzer. In einer bevorzugten Ausführungsform handelt es sich um vulkanisierbare Mischungen, die zusätzlich mindestens einen Füllstoff enthalten.

### Andere optionale Komponenten:

Optional können derartige vulkanisierbare Mischungen auch noch ein oder mehrere dem Fachmann für Kautschuke **geläufige Additive und Faserstoffe** enthalten. Diese umfassen Alterungsschutzmittel, Reversionsschutzmittel, Lichtschutzmittel, Ozonschutzmittel, Verarbeitungshilfsmittel, Weichmacher, Mineralöle, Tackifier, Treibmittel, Farbstoffe, Pigmente, Wachse, Harze, Streckmittel, Füllstoffe, Ruße, Kieselsäuren, pyrogene Kieselsäure, Naturstoffe wie z.B. Tonerde, Kaoline, Wolastonit, organische Säuren, Vulkanisationsverzögerer, Metalloxide, Aramidfasern, Salze von ungesättigten Carbonsäuren wie beispielsweise Zinkdiacrylat (ZDA), Zinkmethacrylate (ZMA) und Zinkdimethylacrylat (ZDMA), flüssige Acrylate, sowie weitere Füllstoffaktivatoren, wie beispielsweise Triethanolamin, Trimethylolpropan, Polyethylenglykol, Hexantriol, aliphatische Trialkoxysilane oder anderen Additive, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Die Gesamtmenge an Additiven und Faserstoffen liegt typischerweise im Bereich von 1 bis 300 phr.

Als **Vernetzer** kommen beispielsweise **peroxidische Vernetzer** in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcyclohexan, *tert*.-Butylperbenzoat, 2,2 Bis(t-butylperoxy)buten, 4,4-Di-*tert*.-butylperoxynonylvalerat, Dicumylperoxid, 2,5-Dimethyl-2,5-di(t-butylperoxy)hexan, *tert*.-Butylcumylperoxid, 1,3-Bis(t-butylperoxyisopropyl)benzol, Di-t-butylperoxid und 2,5-Dimethyl-2,5-di(t-butylperoxy)-hex-3-in.

Es kann vorteilhaft sein, neben diesen peroxidischen Vernetzern noch weitere Zusätze zu verwenden, mit deren Hilfe die **Vernetzungsausbeute erhöht** werden kann: Hierfür sind beispielsweise Triallylisocyanurat, Triallylcyanurat, Trimethylolpropantri(meth)acrylat, Triallyltrimellithat, Ethylenglycoldimethacrylat, Butandioldimethacrylat, Zinkdiacrylat, Zinkdimethacrylat, 1,2-Polybutadien oder N,N'-m-Phenylenbismaleinimid geeignet.

Die **Gesamtmenge des oder der Vernetzer** liegt üblicherweise im Bereich von 1 bis 20 phr, bevorzugt im Bereich von 1,5 bis 15 phr und besonders bevorzugt im Bereich von 2 bis 10 phr, bezogen auf das hydrierte Nitril-Butadien-PEG-Acrylat-Copolymer.

Als **Vernetzer** können auch Schwefel in elementarer löslicher oder unlöslicher Form oder Schwefelspender eingesetzt werden.

Als **Schwefelspender** kommen beispielsweise Dimorpholyldisulfid (DTDM), 2-Morpholino-dithiobenzothiazol (MBSS), Caprolactamdisulfid, Dipentamethylenthiuramtetrasulfid (DPTT) und Tetramethylthiuramdisulfid (TMTD) in Frage.

Auch bei der **Schwefelvulkanisation** des erfindungsgemäßen hydrierten Nitril-Butadien-PEG-Acrylat-Copolymers ist es möglich, weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen hydrierten Nitril-Butadien-PEG-Acrylat-Copolymere aber auch nur in Gegenwart der oben genannten Zusätze erfolgen, d.h. ohne Zusatz von elementarem Schwefel oder Schwefelspendern.

Als **Zusätze,** mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als **Dithiocarbamate** können beispielsweise eingesetzt werden: Ammoniumdimethyldithiocarbamat, Natriumdiethyldithiocarbamat (SDEC), Natriumdibutyldithiocarbamat (SDBC), Zinkdimethyldithiocarbamat (ZDMC), Zinkdiethyldithiocarbamat (ZDEC), Zinkdibutyldithio-carbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithiocarbamat, Nickeldibutyldithio-carbamat, Nickeldimethyldithiocarbamat und Zinkdiisononyldithiocarbamat.

Als **Thiurame** können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuram-disulfid, Dipentamethylenthiuramtetrasulfid und Tetraethylthiuramdisulfid (TETD).

Als **Thiazole** können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzothiazol.

Als **Sulfenamidderivate** können zum Beispiel eingesetzt werden: N-Cyclohexyl-2-benzothiazylsulfenamid (CBS), N-*tert.*-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylen-thiocarbamyl-N-*tert*.butylsulfenamid und Oxydiethylenthiocarbamyl-N-oxyethylensulfenamid.

Als **Xanthogenate** können zum Beispiel eingesetzt werden: Natriumdibutylxanthogenat, Zinkisopropyldibutylxanthogenat und Zinkdibutylxanthogenat.

Als **Guanidinderivate** können zum Beispiel eingesetzt werden: Diphenylguanidin (DPG), Di-o-tolylguanidin (DOTG) und o-Tolylbiguanid (OTBG).

Als **Dithiophosphate** können beispielsweise eingesetzt werden: Zinkdialkydithiophosphate (Kettenlänge der Alkylreste C₂ bis C₁₆), Kupferdialkyldithiophosphate (Kettenlänge der Alkylreste C₂ bis C₁₆) und Dithiophoshorylpolysulfid.

Als Caprolactam kann beispielsweise Dithio-bis-caprolactam eingesetzt werden.

Als **Thioharnstoffderivate** können beispielsweise N,N'-Diphenylthioharnstoff (DPTU), Diethylthioharnstoff (DETU) und Ethylenthioharnstoff (ETU) eingesetzt werden.

Ebenso als Zusätze geeignet sind beispielsweise: Zinkdiamindiisocyanat, Hexamethylentetramin, 1,3-Bis(citraconimidomethyl)benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der hydrierten Nitril-Butadien-PEG-Acrylat-Copolymere eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithiobiscaprolactam.

Die **Vernetzungsmittel** und zuvor genannten Zusätze können jeweils in Mengen von 0,05 phr bis 10 phr, vorzugsweise 0,1 phr bis 8 phr, insbesondere 0,5 phr bis 5 phr (Einzeldosierung, jeweils bezogen auf die Wirksubstanz) bezogen auf das hydrierte Nitril-Butadien-PEG-Acrylat-Copolymer eingesetzt werden.

Bei der Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, beispielsweise: Zinkoxid, Zinkcarbonat, Bleioxid, Magnesiumoxid, Calciumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin, Polyamine und Polyetheramine.

### Verfahren zur Herstellung einer vulkanisierbaren Mischungen enthaltend hydrierte Nitril-Butadien-PEG-Acrylat-Copolymere

Gegenstand der Erfindung ist ferner ein Verfahren zur Herstellung vulkanisierbarer Mischungen enthaltend hydriertes Nitril-Butadien-PEG-Acrylat-Copolymer durch Mischung des hydrierten Nitril-Butadien-PEG-Acrylat-Copolymers mit mindestens einem Vernetzer und den optional weiteren enthaltenen Komponenten. Dieser Mischvorgang kann in allen in der Gummiindustrie üblichen Mischaggregaten, wie z.B. Innenmischern, Banbury Mischern oder Walzen, durchgeführt werden. Die Reihenfolge der Zudosierung ist für den Fachmann durch geeignete Versuche ohne Probleme ermittelbar.

Beispielhaft sind nachfolgend zwei Varianten dargestellt, wie vorgegangen werden kann:

### Verfahren A: Herstellung im Innenmischer

Bevorzugt sind Innenmischer mit ineinandergreifender Rotorgeometrie.

Zum Startzeitpunkt erfolgt die Beschickung des Innenmischers mit dem in Ballenform vorliegenden hydrierten Nitril-Butadien-PEG-Acrylat-Copolymers und es kommt zur Zerkleinerung der Ballen. Nach einem geeigneten Mischzeitraum erfolgt die Zugabe der Füllstoffe und Additive. Das Mischen erfolgt unter Kontrolle der Temperatur mit der Maßgabe, dass das Mischgut für eine geeignete Zeit bei einer Temperatur im Bereich von 80 °C bis 150 °C verbleibt. Nach einem weiteren geeigneten Mischzeitraum erfolgt die Zugabe der weiteren Mischungsbestandteile wie optional Stearinsäure, Antioxidantien, Weichmacher, Weißpigmente (beispielsweise Titandioxid), Farbstoffen und sonstigen Verarbeitungswirkstoffen. Nach einem weiteren geeigneten Mischzeitraum wird der Innenmischer gelüftet und der Schacht gereinigt. Nach einem weiteren geeigneten Zeitraum wird der Innenmischer unter Erhalt der vulkanisierbaren Mischung entleert. Unter geeigneten Zeiträumen sind einige Sekunden bis einige Minuten zu verstehen. Die so hergestellten vulkanisierbaren Mischungen können in üblicher Weise, etwa durch die Mooney-Viskosität, durch Mooney-Scorch oder durch einen Rheometertest beurteilt werden.

### Verfahren B: Herstellung auf der Walze

Werden Walzen als Mischaggregate verwendet, kann in analoger Weise und Reihenfolge bei der Zudosierung vorgegangen werden.

### Verfahren zur Herstellung von Vulkanisaten enthaltend hydriertes Nitril-Butadien-PEG-Acrylat-Copolymer

Gegenstand der Erfindung ist ferner das **Verfahren zur Herstellung von Vulkanisaten** enthaltend hydriertes Nitril-Butadien-PEG-Acrylat-Copolymer **(Vulkanisation),** dadurch gekennzeichnet, dass die vulkanisierbaren Mischungen enthaltend hydriertes Nitril-Butadien-PEG-Acrylat-Copolymer der Vulkanisation unterworfen werden, bevorzugt bei Temperaturen im Bereich von 100 °C bis 250 °C, besonders bevorzugt bei Temperaturen im Bereich von 120 °C bis 250 °C und ganz besonders bevorzugt Temperaturen im Bereich von 130 °C bis 250 °C. Die vulkanisierbaren Mischungen werden hierzu mit Kalandern, Walzen oder Extrudern weiterverarbeitet. Die vorgeformte Masse wird sodann in Pressen, Autoklaven, Heißluftanlagen oder in sogenannten automatischen Mattenvulkanisationsanlagen ("Auma") vulkanisiert, wobei sich bevorzugt Temperaturen im Bereich von 100 °C bis 250 °C, besonders bevorzugt Temperaturen im Bereich von 120 °C bis 250 °C und ganz besonders bevorzugt Temperaturen im Bereich von 130 °C bis 250 °C bewährt haben. Die Vulkanisationszeit beträgt typischerweise 1 Minute bis 24 Stunden und bevorzugt 2 Minuten bis 1 Stunde. Abhängig von der Form und der Größe der Vulkanisate kann eine zweite Vulkanisation durch erneutes Erhitzen notwendig sein, um eine vollständige Vulkanisation zu erreichen.

Gegenstand der Erfindung sind ferner die so erhältlichen **Vulkanisate** basierend auf hydriertem Nitril-Butadien-PEG-Acrylat-Copolymer.

Gegenstand der Erfindung ist auch die **Verwendung** der Vulkanisate basierend auf erfindungsgemäßem, hydrierten Nitril-Butadien-PEG-Acrylat-Copolymer zur Herstellung von Formteilen ausgewählt aus der Gruppe bestehend aus Dichtungen, Walzen, Schuhkomponenten, Schläuchen, Dämpfungselementen, Statoren und Kabelmänteln, bevorzugt Dichtungen.

Gegenstand der Erfindung sind somit **Formteile,** ausgewählt aus der Gruppe bestehend aus Dichtungen, Walzen, Schuhkomponenten, Schläuchen, Dämpfungselementen, Statoren und Kabelmänteln, bevorzugt Dichtungen, basierend auf erfindungsgemäßem hydrierten Nitril-Butadien-PEG-Acrylat-Copolymer. Die hierfür beispielsweise einsetzbaren Methoden wie Molding, Spritzguss- oder Extrusionsverfahren sowie die entsprechende Spritzgiessvorrichtungen oder Extruder sind dem Fachmann hinlänglich bekannt. Bei der Herstellung dieser Formteile können den erfindungsgemäßen hydrierten Nitril-Butadien-PEG-Acrylat-Copolymeren noch die gängigen, dem Fachmann bekannten und von ihm mit üblichem Fachwissen geeignet auszuwählenden Hilfsmittel wie z.B. Füllstoffe, Füllstoffaktivatoren, Beschleuniger, Vernetzer, Ozonschutzmittel, Antioxidationsmittel, Verarbeitungsöle, Extenderöle, Weichmacher, Aktivatoren oder Anvulkanisationshemmer zugesetzt werden.

Der **Vorteil** der Erfindung liegt insbesondere darin, dass das erfindungsgemäße, hydrierte Nitril-Butadien-PEG-Acrylat-Copolymer eine TR 10 von -25 °C oder weniger, eine Quellung in Fuel C von 50 % oder weniger und einen Druckverformungsrest bei - 20 °C von 50 % oder weniger aufweist.

### Beispiele:

### Messverfahren:

Der **RDB-Gehalt (Restdoppelbindungsgehalt)** in % wird durch die folgende FT-IR Messung bestimmt: Die Aufnahme der IR-Spektren des Nitril-Butadien-PEG-Acrylat-Copolymers vor, während und nach der Hydrierung erfolgt durch ein IR-Gerät mit der Bezeichnung Thermo Nicolet FT-IR Spektrometer Type AVATAR 360. Dazu wird eine monochlorbenzolische Lösung des Nitril-Butadien-PEG-Acrylat-Copolymers auf ein NaCI-Plättchen aufgebracht, zu einem Film getrocknet und vermessen. Der Hydriergrad wird mittels FT-IR Analyse nach der ASTM D 567095 Methode ermittelt.

Die Bestimmung der Werte für die **Mooney-Viskosität** (ML1+4@100°C) erfolgt jeweils mittels eines Scherscheibenviskosimeters nach ASTM D1646-07.

Die Bestimmung des **Molekulargewichts** erfolgt durch **Gelpermeationschromatographie** (GPC). Verwendet wurde ein modulares System mit Shodex RI-71 Differentialrefraktometer, Autosampler S 5200 (Firma SFD), Säulenofen (ERC-125), Pumpe Shimadzu LC 10 AT) und einer Säulenkombination aus 3 PLgel 10 µm Mixed B 300x7,5 mm von Agilet. Als Lösungsmittel diente Tetrahydrofuran, die enthaltenen Molekulargewichte beziehen sich auf Polystyrol-Standards der Firma PSS (Mainz). Die fertigen THF-Probelösungen sind durch Spritzenvorsatzfilter mit 0,45 µm PTFE-Membranen und 25 mm Durchmesser filtriert. Die Messungen wurden bei 40°C und einer Fließgeschwindigkeit von 1 ml/min in Tetrahydrofuran durchgeführt.

Die Bestimmung der molekularen Parameter wie Zahlenmittel des Molekulargewichts Mₙ, Massenmittel des Molekulargewichts M_{w} und dem daraus resultierenden Polydispersitätsindex PDI erfolgt aus dem RI-Signal mittels der Software "Empower 2 data base" der Firma Waters.

Der **Stickstoffgehalt** zur Bestimmung des ACN-Gehalts wird in den nitrilgruppenhaltigen Copolymerkautschuken nach Vario EL cube bestimmt. Verbrennung der Einwaage im CHN-Automaten bei etwa 1150 °C in Gegenwart von Oxidationskatalysatoren und Sauerstoff, Aliquotierung der Verbrennungsgase, Absorption der Störkomponenten und Detektion von N₂ durch Wärmeleitfähigkeitsmesszelle (WLD).

Die **Bestimmung der Mikrostruktur und des Termonomergehaltes** der einzelnen Polymere erfolgte mittels 1H NMR (Gerät: Bruker DPX400 mit Software TopSpin 1.3, Messfrequenz 400 MHz, Lösemittel 1,1,2,2-Tetrachlorethan-d2).

Die **Vernetzungsdichte** wurde mit einem Moving Die Rheometer (MDR 2000E) bestimmt, wobei mit einem Winkel von 0,5° und einer Oszillationsfrequenz von 1,7 Hz bei 180 °C für 30 Minuten gemessen wurde.

Für die **Zugprüfung** wurden 2 mm Platten durch Vulkanisation der vulkanisierbaren Mischung bei 180 °C hergestellt. Aus diesen Platten wurden die hantelförmigen Prüfkörper ausgestanzt und nach ASTM D2240-81 die Zugfestigkeit und Dehnung bestimmt.

Die **Härte** wurde mit einem Durometer nach ASTM D2240-81 bestimmt.

Die **Glastemperatur** wurde mit Hilfe einer DSC Messung nach ASTM E 1356-03 bzw. nach DIN 11357-2 erhalten. Dafür wurden zwischen 10 mg und 15 mg der Probe in ein Aluminiumpfännchen eingewogen und versiegelt. Das Pfännchen wurde in einem DSC Gerät von TA Instruments mit einer Heizrate von 10 K/min zweimal von -150 °C auf 150 °C aufgeheizt. Die Glasübergangstemperatur wurde aus der zweiten Aufheizkurve nach dem Standard Mittelwertverfahren bestimmt.

**Quellung:** Hantelförmige Probekörper, wie sie für die Zugprüfung verwendet werden, wurden zur Bestimmung der Quellung in einem geschlossenen Druckbehälter bei 60 °C für 70 h in Fuel C nach DIN ISO 1817 gelagert. Im Anschluss wurden die Proben ausgemessen und ausgewogen und die Volumenquellung und Massezunahme bestimmt. Daran anschließend wurden die Zugfestigkeit und Dehnung nach ASTM D2240-81 bestimmt.

**TR 10 Messung:** Die TR Messung wurde nach ISO 2921, 2005 durchgeführt. Hierfür wurde die Probe bei -70 °C in Silikonöl für 10 Minuten gelagert. Anschließend wurde die Kurve mit 1°C/min aufgezeichnet und die Temperatur für 10 % Veränderung abgelesen.

**DVR Messung:** Die Messung des Druckverformungsrestes bei -20 °C wurde nach DIN ISO 815-2 durchgeführt.

Die in den nachfolgenden Tabellen angegebenen Abkürzungen haben folgende Bedeutungen:
- **"RT"**: Raumtemperatur (23 ± 2 °C)
- **"S min"**: ist das minimale Drehmoment der Vernetzungsisotherme
- **"S max"**: ist das maximale Drehmoment der Vernetzungsisotherme
- **"Delta S"**: ist "S max - S min"
- **"TS1"**: steht für die Zeit, bis die Mooney-Viskosität sich um eine Einheit erhöht hat nachdem das Mooney-Viskositäts-Minimum erreicht wurde, im Vergleich zum Ausgangspunkt
- **"TS2"**: steht für die Zeit, bis die Mooney-Viskosität sich um zwei Einheiten erhöht hat nachdem das Mooney-Viskositäts-Minimum erreicht wurde, im Vergleich zum Ausgangspunkt
- **"t 50"**: ist die Zeit, wenn 50 % von S max erreicht wurde
- **"t 90"**: ist die Zeit, wenn 90 % von S max erreicht wurde
- **"t 95"**: ist die Zeit, wenn 95 % von S max erreicht wurde
- **"M 10"**: Modul bei 10 % Dehnung, gemessen bei RT
- **"M 25"**: Modul bei 25 % Dehnung, gemessen bei RT
- **"M 50"**: Modul bei 50 % Dehnung, gemessen bei RT
- **"M 100"**: Modul bei 100 % Dehnung, gemessen bei RT
- **"M 300"**: Modul bei 300 % Dehnung, gemessen bei RT
- **"EB"**: elongation at break (engl.), Bruchdehnung, gemessen bei RT
- **"TS"**: Tensile strength (engl.), Zugspannung, gemessen bei RT
- **"H"**: Hardness (engl.), Härte, gemessen bei RT

### Folgende Substanzen wurden in den Beispielen eingesetzt:

Die nachfolgenden Chemikalien wurden als Handelsprodukte der jeweils angegebenen Firmen bezogen oder stammen aus Produktionsanlagen der angegebenen Firmen.

### Für die Polymerisation:

- **"Prämix-Lösung Fe(II)SO₄"**: enthält 0,986 g Fe(II)SO₄*7 H₂O und 2,0 g Rongalit® C in 400 g Wasser
- **Rongalit C®**: Natriumsalz eines Sulfinsäurederivates (Handelsprodukt der BASF SE)
- **t-DDM**: tertiäres Dodecylmercaptan (Handelsprodukt der LANXESS Deutschland GmbH)
- **Disponil**® **SDS G**: Natrium-Laurylsulfat (Handelsprodukt der BASF)
- **Glidox**® **500**: Pinanhydroperoxid; (Handelsprodukt der Renessenz)
- **Na-Salz der disproportionierten Harzsäure**: CAS 61790-51-0
- **PEG-3-MA**: Ethoxytriethylenglycolmethacrylat, Molekulargewicht 246,3 g/mol, Evonik Industries AG
- **PEG-8-MA**: Methoxypolyethyleneglycolmethacrylat, Molekulargewicht 430 g/mol, Sartomer Europe
- **Na₂CO₃**: Handelsprodukt der Merck KGaA
- **Diethylhydroxylamin**: Handelsprodukt der Merck KGaA
- **Vulkanox® BKF**: 2,2'-Methylen-bis-(4-methyl-6-*tert*.-butyl-phenol) (Handelsprodukt der LANXESS Deutschland GmbH)

**In der vulkanisierbaren Zusammensetzung verwendeten Substanzen:**
- **Vulkasil**® **A1**: Natriumaluminiumsilikat, kommerziell verfügbar von LANXESS Deutschland GmbH
- **Polestar® 200R**: Kalzinierte Tonerde kommerziell verfügbar von Imerys
- **Uniplex 546**: Trioctyltrimellitat, kommerziell verfügbar von LANXESS Deutschland GmbH
- **Luvomaxx® CDPA**: Ein 70% Masterbatch basiert auf alkyliertem Diphenylamin, hergestellt von Lehmann und Voss
- **Vulkanox® ZMB2/C5**: Zinksalz von 4- und 5-Methyl-2-mercaptobenzthiazol, kommerziell verfügbar von LANXESS Deutschland GmbH
- **Perkadox**® **14-40**: Di(*tert*.-butylperoxyisopropyl)benzol 40% geträgert auf Kieselsäure, kommerziell verfügbar von Akzo Nobel Polymer Chemicals BV
- **TAIC**: Triallylisocyanurat, 70% Masterbatch, kommerziell verfügbar von Kettlitz Chemie GmbH & Co KG.
- **Maglite**®: Magnesiumoxid, kommerziell verfügbar von CP Hall.
- **Zinkoxid activ**: Zinkoxid, kommerziell verfügbar von LANXESS Deutschland GmbH
- **Silquest RC1**: Organosilan, kommerziell verfügbar von Momentive Performance Materials

### I Herstellung der Nitril-Butadien-PEG-Acrylat-Copolymeren (PEG-NBR 1 - 5)

Die Herstellung der in den folgenden Beispielserien eingesetzten PEG-NBR 1 bis 5 erfolgte nach der in Tabelle 1 angegebenen Basisrezeptur, wobei sämtliche Einsatzstoffe in Gew.-% bezogen auf 100 Gew.-% der Monomermischung angegeben sind. Tabelle 1 nennt auch die jeweiligen Polymerisationsbedingungen (Temperatur, Umsatz und Zeit).

**Tabelle 1: Herstellung der Nitril-Butadien-PEG-Acrylat-Copolymeren (PEG-NBR 1 - 5)**

| (erfindungsgemäße Beispiele sind mit einem Stern * gekennzeichnet). | | | | | |
|---|---|---|---|---|---|
| **PEG-NBR** | **1*** | **2** | **3*** | **4** | **5*** |
| Acrylnitril (Gesamt/Inkrement**) | 36/9 | 36/9 | 34/9 | 32/9 | 29/9 |
| 1,3-Butadien | 46 | 53 | 51 | 56 | 46 |
| Ethoxytriethylenglycolmethacrylat (PEG-3-MA) | 18 | 11 | 15 | | 25 |
| Methoxyoctaethylenglycolmethacrylat (PEG-8-MA) | | | | 12 | |
| Gesamtwassermenge | 190 | 190 | 190 | 190 | 190 |
| Disponil® SDS G | 2,4 | 2,4 | 2,4 | 2,4 | 2,4 |
| Na-Salz der disproportionierten Harzsäure | 0,5 | 0,5 | 0,5 | 0,5 | 0,5 |
| Na₂CO₃ | 0,12 | 0,12 | 0,12 | 0,12 | 0,12 |
| pH | 7,5 ±0,5 | 7,5 ±0,5 | 7,5 ±0,5 | 7,5 ±0,5 | 7,5 ±0,5 |
| t-DDM | 0,575 | 0,575 | 0,58 | 0,53 | 0,48 |
| Glidox® 500 | 0,02 | 0,02 | 0,02 | 0,02 | 0,02 |
| Prämix-Lösung FeSO₄ | 0,022 | 0,022 | 0,023 | 0,033 | 0,015 |
| Diethylhydroxylamin | 0,2 | 0,2 | 0,2 | 0,2 | 0,2 |
| Vulkanox® BKF | 0,1 | 0,1 | 0,1 | 0,1 | 0,1 |
| Polymerisationstemperatur [°C] | 12 ±0,5 | 12 ±0,5 | 12 ±0,5 | 12 ±0,5 | 12 ±0,5 |
| Polymerisationsumsatz [%] | 80,1 | 73,6 | 78,1 | 75,7 | 72,7 |
| Polymerisationszeit [h] | 6,38 | 4,38 | 7,5 | 6,75 | 6,38 |

| | | | | | |
|---|---|---|---|---|---|
| ** Die Zugabe des Inkrementes erfolgte bei einem Monomerumsatz von 33% | | | | | |

Die Herstellung der Nitril-Butadien-PEG-Acrylat-Copolymere erfolgte diskontinuierlich in einem 20 L-Autoklaven (PEG-NBR5) oder 5 L-Autoklaven (PEG-NBR1, PEG-NBR2, PEG-NBR3, PEG-NBR4) mit Rührwerk. Bei den Autoklavenansätzen wurden jeweils 4,73 kg (PEG-NBR5) oder 1,18 kg (PEG-NBR1, PEG-NBR2, PEG-NBR3 und PEG-NBR4) der Monomermischung und eine Gesamtwassermenge von 10 kg (PEG-NBR5) oder 2,51 kg (PEG-NBR1, PEG-NBR2, PEG-NBR3, PEG-NBR4) sowie EDTA in einer äquimolaren Menge bezogen auf das Fe-II verwendet. Von dieser Wassermenge wurden 2,25 kg (PEG-NBR1, PEG-NBR2, PEG-NBR3, PEG-NBR4) oder 9 kg (PEG-NBR5) mit dem Emulgator im Autoklaven vorgelegt und mit einem Stickstoffstrom gespült. Danach wurden die Monomeren und die in Tabelle 1 angegebene Menge des Molekulargewichtsreglers t-DDM zugegeben, und der Reaktor verschlossen. Nach der Thermostatisierung des Reaktorinhalts wurden die Polymerisationen durch die Zugabe der Prämix-Lösungen und von Pinanhydroperoxid (Glidox® 500) gestartet.

Der Polymerisationsverlauf wurde durch gravimetrische Umsatzbestimmungen verfolgt. Bei Erreichen der in Tabelle 1 angegebenen Umsätze wurde die Polymerisation durch Zugabe einer wässrigen Lösung von Diethylhydroxylamin abgestoppt. Nicht umgesetzte Monomere und sonstige flüchtige Bestandteile wurden mittels Wasserdampfdestillation entfernt.

Vor der Koagulation des jeweiligen NBR-Latex wurde dieser jeweils mit einer 45%igen Dispersion von Vulkanox® BKF (0,1 Gew. % Vulkanox® BKF bezogen auf NBR-Feststoff) versetzt. Anschließend wurde mit CaCl₂ koaguliert, gewaschen und die erhaltenen Krümel getrocknet.

Die getrockneten PEG-NBR-Kautschuke wurden durch die Mooney-Viskosität, den ACN-Gehalt und die Glasübergangstemperatur charakterisiert und der Gehalt der Termonomere durch 1H-NMR-Analyse bestimmt (Tabelle 2).

**Tabelle 2: Eigenschaften der Nitril-Butadien-PEG-Acrylat-Copolymere (PEG-NBR 1-5) (erfindungsgemäße Beispiele mit einem Stern * gekennzeichnet)**

| **PEG-NBR / BA-NBR** | **1*** | **2** | **3*** | **4** | **5*** |
|---|---|---|---|---|---|
| **ACN-Gehalt [Gew.-%]** | 32,2 | 32,6 | 32,2 | 31,7 | 25,6 |
| **BD-Gehalt [Gew.-%]** | 53,4 | 58,7 | 55,9 | 61,9 | 52,4 |
| **PEG-3-MA [Gew.-%]** | 14,4 | 8,7 | 11,9 | | 22 |
| **PEG-8-MA [Gew.-%]** | | | | 6,4 | |
| **Mooney Viskosität ML(1+4@100°C)** | 44 | 50 | 29 | 23 | 29 |
| **Glasübergangstemperatur Tg Rohpolymer [°C]** | -27,1 | -26,8 | -25,5 | -28,3 | -31,8 |

PEG-NBR1, PEG-NBR2 und PEG-NBR3 unterscheiden sich durch die Menge an einpolymerisierten PEG-3-MA-Monomeren bei konstanter Menge von Acrylnitrilmonomeren.

### II Herstellung der hydrierten Nitril-Butadien-PEG-Acrylat-Copolymere (PEG-HNBR 1 bis 5)

### Durchführung der Hydrierungen

Die folgenden Hydrierungen wurden unter Verwendung der zuvor synthetisierten Nitril-Butadien-PEG-Acrylat-Copolymere (PEG-NBR 1 bis 5) durchgeführt.

Trockenes Monochlorbenzol (MCB) wurde von VWR, Wilkinson-Katalysator von der Firma Materia Inc. und Triphenylphosphin von VWR bezogen und wie erhalten eingesetzt. Die Ergebnisse der Hydrierversuche sind in Tabelle 2 zusammengefasst.

Die Hydrierungen 1 - 5 wurden in einem 10 L Hochdruck-Reaktor unter den folgenden Bedingungen durchgeführt:

| | |
|---|---|
| Lösungsmittel: | Monochlorbenzol |
| Feststoffkonzentration: | 12 - 13 Gew.-% PEG-NBR-Terpolymer in MCB (518 g) |
| Reaktortemperatur: | 137 - 140 °C |
| Reaktionszeit: | bis zu 4 Stunden |
| Katalysator & -ladung: | Wilkinson Katalysator: 0,337 g (0,065 phr); Co-Katalysator: Triphenylphosphin: 5,18 g (1,0 phr) |
| Wasserstoffdruck (p H₂): | 8,4 MPa |
| Rührerdrehzahl: | 600 rpm |

Die PEG-NBR enthaltende Polymerlösung wird dreimal mit H₂ (23 °C, 2 MPa) unter kräftigem Rühren entgast. Die Temperatur des Reaktors wurde auf 100 °C und der H₂-Druck auf 6 MPa angehoben. 123,9 g einer chlorbenzolischen Lösung bestehend aus Wilkinson Katalysator (0,337 g) und Triphenylphosphin (5,18 g) wurden zugeben und der Druck auf 8,4 MPa angehoben, während die Reaktortemperatur auf 137 - 140 °C eingestellt wurde. Beide Parameter wurden während der Reaktion konstant gehalten. Der Reaktionsverlauf wurde mittels Messung des Restdoppelbindungsgehaltes (RDB) des Nitril-Butadien-PEG-Acrylat-Copolymers mittels IR-Spektroskopie verfolgt. Die Reaktion wurde nach höchstens 4 Stunden und/oder Erreichen eines RDB-Gehaltes von <1% durch Ablassen des Wasserstoffdrucks beendet.

Der so entstandene hydrierte PEG-HNBR wurde mittels Dampf-Koagulation aus der Lösung isoliert. Dazu wurde die chlorbenzolische Lösung auf einen Polymergehalt von 7 Gew.-% verdünnt und kontinuierlich in einen gerührten, mit Wasser gefüllten und auf 100 °C vorgeheizten Glasreaktor dosiert. Gleichzeitig wurde mit 0,5 bar Dampf in das Koagulationswasser eingeleitet. Die so ausgefällten Polymerkrümel wurden grob entwässert und anschließend bei 55 °C unter Vakuum bis zur Gewichtskonstanz getrocknet.

**Tabelle 3: Eigenschaften der hydrierten Nitril-Butadien-PEG-Acrylat-Copolymere (PEG-HNBR 1 bis 5) (erfindungsgemäße Beispiele sind mit einem Stern * gekennzeichnet)**

| **PEG-HNBR** | **1*** | **2** | **3*** | **4** | **5*** |
|---|---|---|---|---|---|
| | | | | | |
| **PEG-NBR** | 1* | 2 | 3* | 4 | 5* |
| **RDB [%]** | < 0,5 | < 0,5 | 6,2 | < 0,5 | 5,7 |
| **Mooney Viskosität ML(1+4@100°C)** | 145 | 161 | n.b. | 79 | n.b. |
| **Glasübergangstemperatur Tg Rohpolymer [°C]** | -30,5 | -28,6 | -29,5 | -27,3 | -35,1 |

### III Herstellung von Vulkanisaten der hydrierten Nitril-Butadien-PEG-Acrylat-Copolymere (PEG-HNBR 1 bis 5) sowie eines hydrierten Nitril-Butadien-Butylacrylat-Copolymers (BA-HNBR 6):

### Herstellung der vulkanisierbaren Mischungen:

### Nitril-Butadien-Copolymer Komponenten:

### PEG-HNBR 1

Hydriertes Nitril-Butadien-PEG-Acrylat-Copolymer, hergestellt wie vorhergehend beschrieben, mit einem Acrylnitril (ACN) Gehalt von 32,2 % und einem PEG-3-MA-Gehalt von 14,4 %, einem Restdoppelbindungsgehalt < 0,5 % und einer Mooney-Viskosität, (ML 1+4 @100°C) von 145±2 ME.

### PEG-HNBR 2

Hydriertes Nitril-Butadien-PEG-Acrylat-Copolymer, hergestellt wie vorhergehend beschrieben, mit einem Acrylnitril (ACN) Gehalt von 32,6 % und einem PEG-3-MA Gehalt von 8,7 %, einem Restdoppelbindungsgehalt < 0,5 % und einer Mooney-Viskosität, (ML 1+4 @100°C) von 161±2 ME.

### PEG-HNBR 3

Hydriertes Nitril-Butadien-PEG-Acrylat-Copolymer, hergestellt wie vorhergehend beschrieben, mit einem Acrylnitril (ACN) Gehalt von 32,2 % und einem PEG-3-MA Gehalt von 11,9 % mit einem Restdoppelbindungsgehalt von 6,2 %±0,5 %.

### PEG-HNBR 4

Hydriertes Nitril-Butadien-PEG-Acrylat-Copolymer, hergestellt wie vorhergehend beschrieben, mit einem Acrylnitril (ACN) Gehalt von 31,7 % und einem PEG-8-MA Gehalt von 6,4 %, einem Restdoppelbindungsgehalt < 0,5 % und einer Mooney-Viskosität, (ML 1+4 @100°C) von 79±2 ME.

### PEG-HNBR 5

Hydriertes Nitril-Butadien-PEG-Acrylat-Copolymer, hergestellt wie vorhergehend beschrieben, mit einem Acrylnitril (ACN) Gehalt von 25,6% und einem PEG-3-MA Gehalt von 22%, einem Restdoppelbindungsgehalt 5,7±0,5 %.

### BA-HNBR 6

Kommerziell erhältliches Nitril-Butadien-Butylacrylat-Copolymer unter dem Handelsnamen Therban LT 2568 VP der LANXESS Deutschland GmbH, mit einem Acrylnitril (ACN) Gehalt von 25 % einem Restdoppelbindungsgehalt 5,1±0,5 % und einer Mooney-Viskosität (ML 1+4 @100°C) von 80±2 ME.

**Tabelle 4: Zusammensetzung der vulkanisierbaren Mischungen (erfindungsgemäße Beispiele sind mit einem Stern * gekennzeichnet).**

| **Beispiel** | **V1*** | **V2** | **V3*** | **V4** | **V5*** | **V6** |
|---|---|---|---|---|---|---|
| **Nitril-Butadien-Copolymer** | **Teile** | **Teile** | **Teile** | **Teile** | **Teile** | **Teile** |
| PEG-HNBR 1 | 100 | | | | | |
| PEG-HNBR 2 | | 100 | | | | |
| PEG-HNBR 3 | | | 100 | | | |
| PEG-HNBR 4 | | | | 100 | | |
| PEG-HNBR 5 | | | | | 100 | |
| BA-HNBR | | | | | | 100 |

| **Andere Komponenten** | **phr** | **phr** | **phr** | **phr** | **phr** | **phr** |
|---|---|---|---|---|---|---|
| Vulkasil A1 | 20 | 20 | 20 | 20 | 20 | 20 |
| Polestar 200R | 80 | 80 | 80 | 80 | 80 | 80 |
| TOTM | 10 | 10 | 10 | 10 | 10 | 10 |
| Luvomaxx CDPA | 1,4 | 1,4 | 1,4 | 1,4 | 1,4 | 1,4 |
| VULKANOX ZMB2/C5 | 0,4 | 0,4 | 0,4 | 0,4 | 0,4 | 0,4 |
| PERKADOX 14-40 | 10 | 10 | 10 | 10 | 10 | 10 |
| TAIC 70% | 3 | 3 | 3 | 3 | 3 | 3 |
| MAGLITE | 2 | 2 | 2 | 2 | 2 | 2 |
| ZnO | 5 | 5 | 5 | 5 | 5 | 5 |

Alle vulkanisierbaren Mischungen wurden in einem 375 ml Kneter hergestellt und silanisiert. Das Nitril-Butadien-Copolymer wurde vorgelegt bei 90 °C und ca. 1 Minute gemischt. Nachfolgend wurden die Füllstoffe und Chemikalien zugegeben. Nachdem die Temperatur im Kneter 145 °C erreicht hatte, wurde 3 Minuten bei dieser Temperatur gemischt um eine Silanisierung des Füllstoffs zu erreichen. Dann wurde die Mischung nach insgesamt 12 - 18 Minuten Mischzeit ausgeworfen.

**Tabelle 5: Vernetzungsdichte der Vulkanisate:**

| **MDR 180°C** | | **V1*** | **V2** | **V3*** | **V4** | **V5*** | **V6** |
|---|---|---|---|---|---|---|---|
| S' min | dNm | 2,31 | 1,71 | 1,24 | 1,41 | 1,73 | 1,52 |
| S' max | dNm | 30 | 32 | 34 | 32 | 31 | 32 |
| S'Ende | dNm | 29 | 32 | 34 | 31 | 31 | 32 |
| Delta S' | dNm | 27 | 31 | 33 | 30 | 30 | 30 |
| TS 1 | s | 28 | 29 | 28 | 31 | 28 | 29 |
| TS 2 | s | 34 | 34 | 34 | 37 | 34 | 36 |
| t 50 | s | 60 | 62 | 62 | 67 | 60 | 68 |
| t 90 | s | 102 | 107 | 107 | 114 | 104 | 119 |
| t 95 | s | 265 | 291 | 282 | 303 | 292 | 319 |

Die Formkörper (Platten mit 2 mm Dicke) für die Durchführung der weiteren Bestimmungen wurden durch Vulkanisation bei 180°C für 10 Minuten hergestellt.

**Tabelle 6: Physikalische Eigenschaften der ungealterten Vulkanisate**

| **Zugprüfung** | | **V1*** | **V2** | **V3*** | **V4** | **V5*** | **V6** |
|---|---|---|---|---|---|---|---|
| M 10 | MPa | 0,8 | 0,8 | 0,8 | 0,8 | 0,7 | 0,8 |
| M 25 | MPa | 1,9 | 1,8 | 1,8 | 1,9 | 1,8 | 2 |
| M 50 | MPa | 5,3 | 4,7 | 4,7 | 5,1 | 4,9 | 5,7 |
| M 100 | MPa | 13,1 | 12 | 12,6 | 12,6 | 12,3 | 14,4 |
| EB | % | 116 | 139 | 112 | 125 | 122 | 109 |
| TS | MPa | 15 | 15 | 14 | 15 | 14 | 15 |
| H | ShA | 73 | 71 | 75 | 73 | 73 | 73 |

**Tabelle 7: Alterung der Vulkanisate in Fuel C**

| **Zugprüfung** | | **V1*** | **V2** | **V3*** | **V4** | **V5*** | **V6** |
|---|---|---|---|---|---|---|---|
| **Fuel C, 70 h bei 60 °C** | | | | | | | |
| M 10 | MPa | 0,6 | 0,7 | 0,7 | 0,8 | 0,7 | 0,8 |
| M 25 | MPa | 1,9 | 1,9 | 2,1 | 2,2 | 2,1 | 2,6 |
| M 50 | MPa | 5,7 | 5,3 | 6 | 5,9 | 6,2 | 7,1 |
| M 100 | MPa | - | - | - | - | - | - |
| EB | % | 70 | 79 | 66 | 72 | 65 | 57 |
| TS | MPa | 9 | 9 | 9 | 9 | 9 | 8 |
| H | ShA | 56 | 55 | 56 | 54 | 60 | 62 |

**Tabelle 8: Änderung nach Alterung (70 h bei 60 °C) der Vulkanisate in Fuel C in %**

| **Änderung** | | **V1*** | **V2** | **V3*** | **V4** | **V5*** | **V6** |
|---|---|---|---|---|---|---|---|
| **Fuel C, 70 h bei 60 °C** | | | | | | | |
| Δ EB | % | -40 | -43 | -41 | -42 | -47 | -48 |
| Δ TS | % | -41 | -38 | -38 | -40 | -41 | -47 |
| Δ H | % | -7 | -6 | -7 | -8 | -6 | -6 |
| Massenzunahme | % | 24 | 26 | 26 | 28 | 27 | 33 |
| Volumenzunahme ΔV | % | 43 | 45 | 45 | 47 | 48 | 56 |

**Tabelle 9: DVR und TR-10 der ungealterten Vulkanisate**

| | **V1*** | **V2** | **V3*** | **V4** | **V5*** | **V6** |
|---|---|---|---|---|---|---|
| TR-10 | -29 | -29 | -30 | -28 | -34 | -30 |
| DVR -20 °C, 22 h | 43 | 60 | 27 | 83 | 19 | 20 |
| DVR 150 °C, 70 h | 36 | 22 | 21 | 21 | 25 | 18 |

Die erfindungsgemäßen Vulkanisate **V1, V3** und **V5** weisen sowohl eine TR-10 von - 25 °C oder weniger auf als auch einen DVR bei -20 °C von 50 % oder weniger und ein ΔV von 50 % oder weniger auf.
Vergleichs-Vulkanisat **V2** mit einem **PEG-3-Monomer-Gehalt von weniger als 10 Gew.-**% weist einen schlechteren DVR -20°C von mehr als 50 % auf.
Vergleichs-Vulkanisat **V4** mit einer zu geringen **PEG-8-Monomer-Gehalt von weniger als 10 Gew.-%** weist einen schlechteren DVR bei -20°C von mehr als 50 % auf. Vergleichs-Vulkanisat **V6 mit BA-Monomeren anstelle von PEG-Monomeren** weist eine schlechtere Quellung (= Volumenzunahme) auf (siehe Tabelle 9).

Der Vorteil der Erfindung liegt insbesondere darin, dass das erfindungsgemäße hydrierte Nitril-Butadien-PEG-Acrylat-Copolymer
- eine TR 10 von weniger als -25 °C,
- eine Quellung in Fuel C von weniger als 50 % aufweist und
- einen Druckverformungsrest (DVR) bei -20°C von weniger als 50 % aufweist.

In der Kombination dieser Eigenschaften sind die neuen Polymer konventionellen hydrierten Nitril-Butadien-Copolymeren überlegen.

## Patentansprüche

1. **Hydrierte Nitril-Butadien-PEG-Acrylat-Copolymere,** enthaltend
a) **25 bis 38 Gew.-%,** bevorzugt 27 bis 37 Gew.-% und besonders bevorzugt 29 bis 36 Gew.-% zumindest einer α,β-ethylenisch ungesättigten **Nitrileinheit,**
b) **40 bis 60 Gew.-%,** bevorzugt 42 bis 58 Gew.-%, und besonders bevorzugt 44 bis 59 Gew.-% zumindest einer konjugierten **Dieneinheit** und
c) **10** bis **25 Gew.-%,** bevorzugt 11 bis 22 Gew.-% und besonders bevorzugt 12 bis 20 Gew.-% zumindest einer **PEG-Acrylateinheit** abgeleitet von einem PEG-Acrylat der allgemeinen Formel (I) 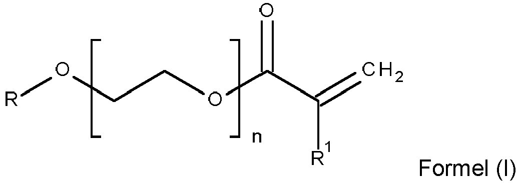 wobei
R gleich Wasserstoff oder verzweigtes oder unverzweigtes C₁-C₂₀-Alkyl, bevorzugt Methyl, Ethyl, Butyl oder Ethylhexyl, ist,
n gleich 1 bis 8, bevorzugt 2 bis 8, besonders bevorzugt 2 bis 5 und ganz besonders bevorzugt 3 ist und
R¹ gleich Wasserstoff oder CH₃- ist,
wobei das hydrierte Nitril-Butadien-PEG-Acrylat-Copolymer für den Fall, dass n gleich 1 ist keine weitere copolymerisierbare Monomereinheit enthält, die eine freie Carbonsäuregruppe aufweist.

2. Hydrierte Nitril-Butadien-PEG-Acrylat-Copolymere nach Anspruch 1, **dadurch gekennzeichnet, dass** der **Grad der Hydrierung** der konjugierten Dieneinheiten (b) 90 % oder mehr und bevorzugt 99 % oder mehr beträgt.

3. Hydrierte Nitril-Butadien-PEG-Acrylat-Copolymere nach Anspruch 1 oder 2, **dadurch gekennzeichnet, dass** die α,β-ethylenisch ungesättigten **Nitrileinheiten (a)** Acrylnitril, Methacrylnitril, Ethacrylnitril oder eine Mischungen davon ist und bevorzugt **Acrylnitril** ist.

4. Hydrierte Nitril-Butadien-PEG-Acrylat-Copolymere nach einem der Ansprüche 1 bis 3, **dadurch gekennzeichnet, dass** die konjugierten **Dieneinheiten (b)** 1,3-Butadien, Isopren, 2,3-Dimethylbutadien, 1,3-Pentadiene (Piperylen) oder Gemische davon, bevorzugt **1,3-Butadien** sind.

5. Hydrierte Nitril-Butadien-PEG-Acrylat-Copolymer nach einem der Ansprüche 1 bis 4, **dadurch gekennzeichnet, dass** die **PEG-Acrylateinheit (c)** Methoxy-, Ethoxy-, Butoxy- oder Ethylhexoxy-Polyethylenglycol(meth)acrylat mit **2 bis 8 Ethylenglycol-Wiederholungseinheiten,** besonders bevorzugt Methoxy- oder Ethoxy-Polyethylenglycol(meth)acrylat mit **2 bis 5** Ethylenglycol-Wiederholungseinheiten und ganz besonders bevorzugt Methoxy- oder Ethoxy-Polyethylenglycol(meth)acrylat mit 3 Ethylenglycol-Wiederholungseinheiten ist.

6. **Verfahren** zur Herstellung hydrierter Nitril-Butadien-PEG-Acrylat-Copolymere nach einem der Ansprüche 1 bis 5, **dadurch gekennzeichnet, dass** mindestens ein α,β-ethylenisch ungesättigtes Nitril, mindestens ein konjugiertes Dien und mindestens ein PEG-Acrylat der allgemeinen Formel (I) einer Emulsionspolymerisation unterworfen und anschließend hydriert werden.

7. **Vulkanisierbare Mischungen** enthaltend hydrierte Nitril-Butadien-PEG-Acrylat-Copolymere nach einem der Ansprüche 1 bis 5 und mindestens einen Vernetzer.

8. **Verfahren zur Herstellung von vulkanisierbaren Mischungen** nach Anspruch 7, durch Mischen eines hydrierten Nitril-Butadien-PEG-Acrylat-Copolymers nach einem der Ansprüche 1 bis 5 mit mindestens einem Vernetzer.

9. **Verfahren zur Herstellung von Vulkanisaten** basierend auf hydrierten Nitril-Butadien-PEG-Acrylat-Copolymeren, **dadurch gekennzeichnet, dass** die vulkanisierbaren Mischungen nach Anspruch 7 der Vulkanisation unterworfen werden, bevorzugt bei Temperaturen im Bereich von 100 °C bis 250 °C, besonders bevorzugt bei Temperaturen im Bereich von 120 °C bis 250 °C und ganz besonders bevorzugt von 130 °C bis 250 °C.

10. **Vulkanisat** basierend auf hydrierten Nitril-Butadien-PEG-Acrylat-Copolymeren nach einem der Ansprüche 1 bis 5.

11. **Verwendung** des hydrierten Nitril-Butadien-PEG-Acrylat-Copolymers gemäß Anspruch 9 zur Herstellung von Formteilen ausgewählt aus der Gruppe bestehend aus Dichtungen, Walzen, Schuhkomponenten, Schläuchen, Dämpfungselementen, Statoren und Kabelmänteln, bevorzugt Dichtungen.

12. **Formteile** ausgewählt aus der Gruppe bestehend aus Dichtungen, Walzen, Schuhkomponenten, Schläuchen, Dämpfungselementen, Statoren und Kabelmänteln, bevorzugt Dichtungen, basierend auf hydrierten Nitril-Butadien-PEG-Acrylat-Copolymeren nach einem der Ansprüche 1 bis 5.

## Claims

1. **Hydrogenated nitrile-butadiene-PEG acrylate copolymers** containing
a) **25% to 38% by weight,** preferably 27% to 37% by weight and more preferably 29% to 36% by weight of at least one α,β-ethylenically unsaturated **nitrile unit,**
b) **40% to 60% by weight,** preferably 42% to 58% by weight and more preferably 44% to 59% by weight of at least one conjugated **diene unit** and
c) **10%** to **25% by weight,** preferably 11% to 22% by weight and more preferably 12% to 20% by weight of at least one **PEG acrylate unit** derived from a PEG acrylate of the general formula (I) 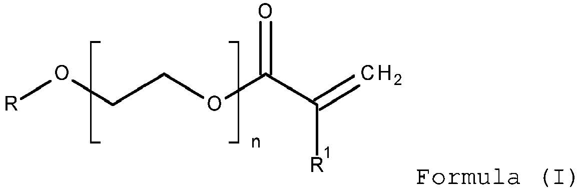 where
R is hydrogen or branched or unbranched C₁-C₂₀-alkyl, preferably methyl, ethyl, butyl or ethylhexyl,
n is 1 to 8, preferably 2 to 8, more preferably 2 to 5 and most preferably 3 and
R¹ is hydrogen or CH₃-,
where the hydrogenated nitrile-butadiene-PEG acrylate copolymer, if n is 1, does not contain any further copolymerizable monomer unit having a free carboxylic acid group.

2. Hydrogenated nitrile-butadiene-PEG acrylate copolymers according to Claim 1, **characterized in that** the **level of hydrogenation** of the conjugated diene units (b) is 90% or more and preferably 99% or more.

3. Hydrogenated nitrile-butadiene-PEG acrylate copolymers according to Claim 1 or 2, **characterized in that** the α,β-ethylenically unsaturated **nitrile units (a)** is acrylonitrile, methacrylonitrile, ethacrylonitrile or a mixtures thereof, and is preferably **acrylonitrile.**

4. Hydrogenated nitrile-butadiene-PEG acrylate copolymers according to any of Claims 1 to 3, **characterized in that** the conjugated **diene units (b)** are 1,3-butadiene, isoprene, 2,3-dimethylbutadiene, 1,3-pentadiene (piperylene) or mixtures thereof, preferably **1,3-butadiene.**

5. Hydrogenated nitrile-butadiene-PEG acrylate copolymer according to any of Claims 1 to 4, **characterized in that** the **PEG acrylate unit (c)** is methoxy, ethoxy, butoxy or ethylhexoxy polyethylene glycol (meth)acrylate having **2 to 8 repeat ethylene glycol units,** more preferably methoxy or ethoxy polyethylene glycol (meth)acrylate having **2 to 5** repeat ethylene glycol units and most preferably methoxy or ethoxy polyethylene glycol (meth)acrylate having **3** repeat ethylene glycol units.

6. **Process** for preparing hydrogenated nitrile-butadiene-PEG acrylate copolymers according to any of Claims 1 to 5, **characterized in that** at least one α,β-ethylenically unsaturated nitrile, at least one conjugated diene and at least one PEG acrylate of the general formula (I) are subjected to an emulsion polymerization and then hydrogenated.

7. **Vulcanizable mixtures** comprising hydrogenated nitrile-butadiene-PEG acrylate copolymers according to any of Claims 1 to 5 and at least one crosslinker.

8. **Process for producing vulcanizable mixtures** according to Claim 7, by mixing a hydrogenated nitrile-butadiene-PEG acrylate copolymer according to any of Claims 1 to 5 with at least one crosslinker.

9. **Process for producing vulcanizates,** based on hydrogenated nitrile-butadiene-PEG acrylate copolymers, **characterized in that** the vulcanizable mixtures according to Claim 7 are subjected to vulcanization, preferably at temperatures in the range from 100°C to 250°C, more preferably at temperatures in the range from 120°C to 250°C and most preferably from 130°C to 250°C.

10. **Vulcanizate** based on hydrogenated nitrile-butadiene-PEG acrylate copolymers according to any of Claims 1 to 5.

11. **Use** of the hydrogenated nitrile-butadiene-PEG acrylate copolymer according to Claim 9 for production of mouldings selected from the group consisting of seals, rollers, shoe components, hoses, damping elements, stators and cable sheaths, preferably seals.

12. **Mouldings** selected from the group consisting of seals, rollers, shoe components, hoses, damping elements, stators and cable sheaths, preferably seals, based on hydrogenated nitrile-butadiene-PEG acrylate copolymers according to any of Claims 1 to 5.

## Revendications

1. **Copolymères de nitrile-butadiène-acrylate de PEG hydrogénés,** contenant :
a) **25 à 38 % en poids,** de préférence 27 à 37 % en poids et de manière particulièrement préférée 29 à 36 % en poids, d'au moins une **unité nitrile** α,β-éthyléniquement insaturée,
b) **40 à 60 % en poids,** de préférence 42 à 58 % en poids et de manière particulièrement préférée 44 à 59 % en poids, d'au moins une **unité diène** conjuguée, et
c) **10 à 25 % en poids,** de préférence 11 à 22 % en poids et de manière particulièrement préférée 12 à 20 % en poids, d'au moins **unité acrylate de PEG** dérivée d'un acrylate de PEG de la formule générale (I) : 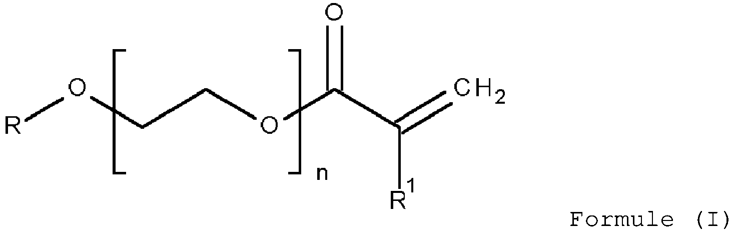 dans laquelle
R représente hydrogène ou alkyle en C₁-C₂₀ ramifié ou non ramifié, de préférence méthyle, éthyle, butyle ou éthylhexyle,
n représente 1 à 8, de préférence 2 à 8, de manière particulièrement préférée 2 à 5 et de manière tout particulièrement préférée 3, et
R¹ représente hydrogène ou CH₃-,
le copolymère de nitrile-butadiène-acrylate de PEG hydrogéné dans le cas où n représente 1 ne contenant pas d'unité monomère copolymérisable supplémentaire qui comprend un groupe acide carboxylique libre.

2. Copolymères de nitrile-butadiène-acrylate de PEG hydrogénés selon la revendication 1, **caractérisés en ce que** le **degré d'hydrogénation** des unités diène conjuguées (b) est de 90 % ou plus et de préférence de 99 % ou plus.

3. Copolymères de nitrile-butadiène-acrylate de PEG hydrogénés selon la revendication 1 ou 2, **caractérisés en ce que** les **unités nitrile** α,β-éthyléniquement insaturées **(a)** sont l'acrylonitrile, le méthacrylonitrile, l'éthacrylonitrile ou un mélange de ceux-ci et de préférence **l'acrylonitrile.**

4. Copolymères de nitrile-butadiène-acrylate de PEG hydrogénés selon l'une quelconque des revendications 1 à 3, **caractérisés en ce que** les **unités diène** conjuguées **(b)** sont le 1,3-butadiène, l'isoprène, le 2,3-diméthylbutadiène, les 1,3-pentadiènes (pipérylène) ou des mélanges de ceux-ci, de préférence le **1,3-butadiène.**

5. Copolymère de nitrile-butadiène-acrylate de PEG hydrogéné selon l'une quelconque des revendications 1 à 4, **caractérisé en ce que l'unité acrylate de PEG (c)** est le (méth)acrylate de méthoxy-, éthoxy-, butoxy- ou éthylhexoxy-polyéthylène glycol contenant **2 à 8 unités de répétition éthylène glycol,** de manière particulièrement préférée le (méth)acrylate de méthoxy ou éthoxy-polyéthylène glycol contenant **2 à 5** unités de répétition éthylène glycol, et de manière tout particulièrement préférée le (méth)acrylate de méthoxy- ou éthoxy-polyéthylène glycol contenant **3** unités de répétition éthylène glycol.

6. **Procédé** de fabrication de copolymères de nitrile-butadiène-acrylate de PEG hydrogénés selon l'une quelconque des revendications 1 à 5, **caractérisé en ce qu'**au moins un nitrile α,β-éthyléniquement insaturé, au moins un diène conjugué et au moins un acrylate de PEG de la formule générale (I) sont soumis à une polymérisation en émulsion, puis hydrogénés.

7. **Mélanges vulcanisables** contenant des copolymères de nitrile-butadiène-acrylate de PEG hydrogénés selon l'une quelconque des revendications 1 à 5 et au moins un agent de réticulation.

8. **Procédé de fabrication de mélanges vulcanisables** selon la revendication 7, par mélange d'un copolymère de nitrile-butadiène-acrylate de PEG hydrogéné selon l'une quelconque des revendications 1 à 5 avec au moins un agent de réticulation.

9. **Procédé de fabrication de vulcanisats** à base de copolymères de nitrile-butadiène-acrylate de PEG hydrogénés, **caractérisé en ce que** les mélanges vulcanisables selon la revendication 7 sont soumis à la vulcanisation, de préférence à des températures dans la plage allant de 100 °C à 250 °C, de manière particulièrement préférée à des températures dans la plage allant de 120 °C à 250 °C et de manière tout particulièrement préférée de 130 °C à 250 °C.

10. **Vulcanisat** à base de copolymères de nitrile-butadiène-acrylate de PEG hydrogénés selon l'une quelconque des revendications 1 à 5.

11. **Utilisation** du copolymère de nitrile-butadiène-acrylate de PEG hydrogéné selon la revendication 9 pour la fabrication de pièces moulées choisies dans le groupe constitué par les joints d'étanchéité, les cylindres, les composants de chaussures, les tuyaux, les éléments d'amortissement, les stators et les enrobages de câbles, de préférence les joints d'étanchéité.

12. **Pièces moulées** choisies dans le groupe constitué par les joints d'étanchéité, les cylindres, les composants de chaussures, les tuyaux, les éléments d'amortissement, les stators et les enrobages de câbles, de préférence les joints d'étanchéité, à base de copolymères de nitrile-butadiène-acrylate de PEG hydrogénés selon l'une quelconque des revendications 1 à 5.
